# EUROPEAN PATENT APPLICATION

(11) **EP 4 570 610 A1**
(43) Date of publication of application: **18.06.2025**
(21) Application number: 23862011.6
(22) Date of filing: 29.06.2023
(51) Int. Cl.: B60W 60/00, B60W 30/095

(54) **CONTROL METHOD AND APPARATUS, AND VEHICLE**

(30) Priority: 05.09.2022 CN 202211077102
(71) Applicant: Shenzhen Yinwang Intelligent Technologies Co., Ltd., Shenzhen, Guangdong 518129 (CN)
(72) Inventor: YANG, Shaoyu, Shenzhen, Guangdong 518129 (CN); CHEN, Wei, Shenzhen, Guangdong 518129 (CN); HAO, Donghao, Shenzhen, Guangdong 518129 (CN); AN, Quan, Shenzhen, Guangdong 518129 (CN); CHENG, Siyuan, Shenzhen, Guangdong 518129 (CN); WANG, Xinyu, Shenzhen, Guangdong 518129 (CN)
(74) Representative: Pfenning, Meinig & Partner mbB
(86) International application number: PCT/CN2023/103926
(87) International publication number: WO 2024/051310

(57) **Abstract**

A control method includes: when there is a possibility of collision between a target vehicle and a target object, classifying the target vehicle and the target object into an active party and a passive party, where the active party has a passage priority relative to the passive party; obtaining a first strategy set that is feasible for the active party, where the first strategy set includes at least one first traveling strategy; determining a second traveling strategy of the passive party corresponding to each first traveling strategy in the first strategy set based on the first strategy set, to obtain a second strategy set; analyzing execution costs of feasible strategies obtained based on the first strategy set and the second strategy set, to obtain a first cost set, where each feasible strategy pair is formed by one first traveling strategy and one second traveling strategy, and the first cost set includes a cost that is associated with each feasible strategy pair and that indicates a cost of executing the feasible strategy pair; and controlling the target vehicle according to a traveling strategy corresponding to a lowest execution cost in the first cost set. This improves driving experience.

## Description

This application claims priority to Chinese Patent Application No. 202211077102.4, filed with the China National Intellectual Property Administration on September 5, 2022 and entitled "CONTROL METHOD AND APPARATUS, AND VEHICLE", which is incorporated herein by reference in its entirety.

### TECHNICAL FIELD

This application relates to the field of artificial intelligence (artificial intelligence, AI) technologies, and in particular, to a control method and apparatus, and a vehicle.

### BACKGROUND

Autonomous driving is a mainstream application in the artificial intelligence field. An autonomous driving technology relies on cooperation of computer vision, a radar, a monitoring apparatus, a global positioning system, and the like, so that a vehicle can implement autonomous driving without an active manual operation. In the autonomous driving field, a vehicle may execute a corresponding traveling strategy based on an actual driving scenario, to ensure safe traveling of the vehicle. However, currently, when a trajectory conflict occurs between a plurality of vehicles, the vehicles usually perform traveling strategies such as false deceleration and false acceleration. This affects safe acceleration and driving experience.

### SUMMARY

This application provides a control method and apparatus, a vehicle, a computer storage medium, and a computer product, so that the vehicle can continuously probe a traveling intention of another object, and make a final preemption or yielding decision until the traveling intention of the another object is clear. This implements effect of slow acceleration for preemption or slow deceleration for yielding, and improves driving experience.

According to a first aspect, this application provides a control method. The method includes: classifying a target vehicle and a target object into an active party and a passive party, where the active party has a passage priority relative to the passive party, and there is a possibility of collision between the target vehicle and the target object; obtaining a first strategy set that is feasible for the active party, where the first strategy set includes at least one first traveling strategy; obtaining a second traveling strategy of the passive party corresponding to each first traveling strategy in the first strategy set according to each first traveling strategy in the first strategy set, a traveling parameter of the active party at a current moment, and a traveling parameter of the passive party at the current moment, to obtain a second strategy set, where the second traveling strategy is any one of the following: the passive party only preempts the active party, the passive party only yields to the active party, or the passive party is capable of both preempting the active party and yielding to the active party; determining a target strategy pair set based on the first strategy set and the second strategy set, where the target strategy pair set includes at least one feasible strategy pair, and each feasible strategy pair is formed by one first traveling strategy and one second traveling strategy; determining execution costs of feasible strategy pairs in the target strategy pair set, to obtain a first cost set, where the first cost set includes an execution cost of each feasible strategy pair; determining a target traveling strategy based on the first cost set, where the target traveling strategy is a traveling strategy that is of the target vehicle and that is associated with a lowest execution cost in the first cost set; and controlling the target vehicle according to the target traveling strategy. For example, the traveling parameter at the current moment may be, but is not limited to, a traveling parameter observed when the first strategy set is obtained, a traveling parameter observed when the second strategy set is solved, or a traveling parameter recently observed before the method is performed.

In this way, when there is a possibility of conflict between the target vehicle and the target object, the target vehicle and the target object may be classified into an active party and a passive party, a feasible strategy of the passive party is solved according to a feasible strategy of the active party, then execution costs of executing feasible strategies of the active party and the passive party are calculated, and finally, a feasible strategy with a lowest cost is selected to control the target vehicle. In this way, the target vehicle can continuously probe a traveling intention of another object, and make a final preemption or yielding decision until the traveling intention of the another object is clear. This implements effect of slow acceleration for preemption or slow deceleration for yielding, and improves driving experience.

In a possible implementation, if the target vehicle is the active party, and the target object is the passive party, the determining a target traveling strategy based on the first cost set specifically includes: if a second traveling strategy in a feasible strategy pair corresponding to a target cost is that the passive party only preempts the active party, determining that the target traveling strategy is that the target vehicle yields to the target object, where the target cost is the lowest execution cost in the first cost set; if a second traveling strategy in a feasible strategy pair corresponding to a target cost is that the passive party only yields to the active party, determining that the target traveling strategy is that the target vehicle preempts the target object; or if a second traveling strategy in a feasible strategy pair corresponding to a target cost is that the passive party is capable of both preempting the active party and yielding to the active party, determining that the target traveling strategy is a first traveling strategy in the feasible strategy pair corresponding to the target cost.

In this way, if the target vehicle is the active party, and the target object is the passive party, when a traveling strategy of the target object is one of preempting the target vehicle or yielding to the target vehicle, it indicates that the traveling intention of the target object is clear. In this case, it may be determined that a traveling strategy of the target vehicle is opposite to the traveling strategy of the target object. To be specific, when the traveling strategy of the target object is preempting the target vehicle, it is determined that the traveling strategy of the target vehicle is yielding to the target object. When the traveling strategy of the target object is yielding to the target vehicle, it is determined that the traveling strategy of the target vehicle is preempting the target object. When the traveling strategy of the target object is that both preempting and yielding to the target vehicle are available, it indicates that the traveling intention of the target object is not clear. In this case, the target vehicle may continue to be controlled to probe the traveling intention of the target object. In addition, in this case, the target vehicle is an active party, and a right of way of the active party is higher than a right of way of the passive party, however, in a driving process, a party with a lower right of way usually needs to yield to a party with a lower right of way. Therefore, in this case, the target vehicle may be controlled to execute the first traveling strategy in the feasible strategy pair corresponding to the target cost, that is, it is determined that the traveling strategy of the target object is the first traveling strategy in the feasible strategy pair corresponding to the target cost.

In a possible implementation, if the target vehicle is the passive party, and the target object is the active party, the determining a target traveling strategy based on the first cost set specifically includes: if a second traveling strategy in a feasible strategy pair corresponding to a target cost is that the passive party only preempts the active party, determining that the target traveling strategy is that the target vehicle preempts the target object, where the target cost is the lowest execution cost in the first cost set; if a second traveling strategy in a feasible strategy pair corresponding to a target cost is that the passive party only yields to the active party, determining that the target traveling strategy is that the target vehicle yields to the target object; or if a second traveling strategy in a feasible strategy pair corresponding to a target cost is that the passive party is capable of both preempting the active party and yielding to the active party, determining that the target traveling strategy is that the target vehicle yields to the target object.

In this way, if the target vehicle is the passive party, and the target object is the active party, when a traveling strategy of the target vehicle is preempting the target object, it indicates that the target vehicle has only one traveling strategy that is optional. Therefore, it may be determined that the traveling strategy is a traveling strategy that needs to be executed by the target vehicle. Similarly, when the traveling strategy of the target vehicle is yielding to the target object, it indicates that the target vehicle has only one traveling strategy that is optional. Therefore, it may be determined that the traveling strategy is a traveling strategy that needs to be executed by the target vehicle. When the traveling strategy of the target vehicle is that both preempting and yielding to the target object are available, it indicates that the traveling intention of the target object is not clear. In this case, if the target vehicle performs a preemption decision or a yielding decision, a case like hard braking/cadence braking or even takeover is likely to occur, and driving experience is poor. In addition, because the target vehicle is a passive party in this case, a right of way of the target vehicle is lower than a right of way of the target object. In addition, in a traveling process, a party with a lower right of way usually needs to yield to a party with a lower right of way. Therefore, the target vehicle may be controlled to travel at a decelerated speed, to probe the traveling intention of the target object. In other words, it is determined that the traveling strategy of the target vehicle is yielding to the target object.

In a possible implementation, the execution cost associated with the feasible strategy pair includes one or more of the following: a comfort cost, representing a comfort degree during execution of the feasible strategy pair; a pass cost, representing efficiency of the active party and/or the passive party passing through a conflict point between the active party and the passive party; an offset cost, representing an evaluation of an offset that occurs when the active party executes a corresponding traveling strategy and/or an evaluation of an offset that occurs when the passive party executes a corresponding traveling strategy; an inconsistency cost, representing an evaluation of a deviation between a traveling behavior of the target object in the feasible strategy pair and an actual traveling behavior of the target object; or a decision punishment cost, representing an evaluation of whether an intention of the passive party is clear.

In a possible implementation, determining, for any first strategy pair in all the feasible strategy pairs, a comfort cost associated with the first strategy pair specifically includes: determining, based on an acceleration corresponding to a first traveling strategy in the first strategy pair and a current acceleration of the active party, a first comfort cost generated when the active party executes the first traveling strategy in the first strategy pair; determining, based on an acceleration corresponding to a second traveling strategy in the first strategy pair and a current acceleration of the passive party, a second comfort cost generated when the passive party executes the second traveling strategy in the first strategy pair; and determining, based on the first comfort cost and the second comfort cost, the comfort cost associated with the first strategy pair. For example, the current acceleration of the active party may be, but is not limited to, an acceleration of the active party observed when the first strategy set is obtained, an acceleration of the active party observed when the second strategy set is solved, or an acceleration of the active party recently observed before the method is executed.

In a possible implementation, determining, for the any first strategy pair in all the feasible strategy pairs, a pass cost associated with the first strategy pair specifically includes: determining, based on first time and second time, a first pass cost generated when the active party executes the first traveling strategy in the first strategy pair, where the first time is time for the active party to pass through a target point when the first traveling strategy in the first strategy pair is executed, the second time is time for the active party to pass through the target point at a current speed and the current acceleration of the active party, and the target point is a conflict point between a traveling path of the active party and a traveling path of the passive party; determining, based on third time and fourth time, a second pass cost generated when the passive party executes the second traveling strategy in the first strategy pair, where the third time is time for the passive party to pass through the target point when the second traveling strategy in the first strategy pair is executed, and the fourth time is time for the passive party to pass through the target point at a current speed and the current acceleration of the passive party; and determining, based on the first pass cost and the second pass cost, the pass cost associated with the first strategy pair.

In a possible implementation, determining, for the any first strategy pair in all the feasible strategy pairs, an offset cost associated with the first strategy pair specifically includes: determining, based on an offset generated when the active party executes the first traveling strategy in the first strategy pair and a preset mapping relationship between an offset and an offset cost, a first offset cost generated when the active party executes the first traveling strategy in the first strategy pair; determining, based on an offset generated when the passive party executes the second traveling strategy in the first strategy pair and the preset mapping relationship between the offset and the offset cost, a second offset cost generated when the passive party executes the second traveling strategy in the first strategy pair; and determining, based on the first offset cost and the second offset cost, the offset cost associated with the first strategy pair.

In a possible implementation, determining, for the any first strategy pair in all the feasible strategy pairs, an inconsistency cost associated with the first strategy pair specifically includes: when a traveling strategy of the target object in the first strategy pair is only preempting the target vehicle or only yielding to the target vehicle, determining a target probability of the target object for preempting the target vehicle, and determining the inconsistency cost based on the target probability; or when a traveling strategy of the target object in the first strategy pair is that both preempting the target vehicle and yielding to the target vehicle are available, determining that the inconsistency cost is a preset cost value.

In a possible implementation, determining, for the any first strategy pair in all the feasible strategy pairs, a decision punishment cost associated with the first strategy pair specifically includes: determining, according to a preset decision punishment rule and the second traveling strategy in the first strategy pair, the decision punishment cost associated with the first strategy pair.

In a possible implementation, the second traveling strategy in the first strategy pair is that the passive party is capable of both preempting the active party and yielding to the active party. The determining, according to a preset decision punishment rule and the second traveling strategy in the first strategy pair, the decision punishment cost associated with the first strategy pair specifically includes: determining a first decision punishment cost according to the decision punishment rule and the second traveling strategy in the first strategy pair; determining, based on the acceleration corresponding to the first traveling strategy in the first strategy pair and the current acceleration of the active party, a second decision punishment cost generated when the active party executes the first traveling strategy in the first strategy pair; and determining, based on the first decision punishment cost and the second decision punishment cost, the decision punishment cost associated with the first strategy pair.

According to a second aspect, this application provides a control apparatus. The apparatus includes a classification module and a processing module. The classification module is configured to classify a target vehicle and a target object into an active party and a passive party, where the active party has a passage priority relative to the passive party, and there is a possibility of collision between the target vehicle and the target object. The processing module is configured to obtain a first strategy set that is feasible for the active party, where the first strategy set includes at least one first traveling strategy. The processing module is further configured to obtain a second traveling strategy of the passive party corresponding to each first traveling strategy in the first strategy set according to each first traveling strategy in the first strategy set, a traveling parameter of the active party at a current moment, and a traveling parameter of the passive party at the current moment, to obtain a second strategy set, where the second traveling strategy is any one of the following: the passive party only preempts the active party, the passive party only yields to the active party, or the passive party is capable of both preempting the active party and yielding to the active party. The processing module is further configured to determine a target strategy pair set based on the first strategy set and the second strategy set, where the target strategy pair set includes at least one feasible strategy pair, and each feasible strategy pair is formed by one first traveling strategy and one second traveling strategy. The processing module is further configured to determine execution costs of feasible strategy pairs in the target strategy pair set, to obtain a first cost set, where the first cost set includes an execution cost of each feasible strategy pair. The processing module is further configured to determine a target traveling strategy based on the first cost set, where the target traveling strategy is a traveling strategy that is of the target vehicle and that is associated with a lowest execution cost in the first cost set. The processing module is further configured to control the target vehicle according to the target traveling strategy.

In a possible implementation, if the target vehicle is the active party, and the target object is the passive party, when determining the target traveling strategy based on the first cost set, the processing module is specifically configured to: if a second traveling strategy in a feasible strategy pair corresponding to a target cost is that the passive party only preempts the active party, determine that the target traveling strategy is that the target vehicle yields to the target object, where the target cost is the lowest execution cost in the first cost set; if a second traveling strategy in a feasible strategy pair corresponding to a target cost is that the passive party only yields to the active party, determine that the target traveling strategy is that the target vehicle preempts the target object; or if a second traveling strategy in a feasible strategy pair corresponding to a target cost is that the passive party is capable of both preempting the active party and yielding to the active party, determine that the target traveling strategy is a first traveling strategy in the feasible strategy pair corresponding to the target cost.

In a possible implementation, if the target vehicle is the passive party, and the target object is the active party, when determining the target traveling strategy based on the first cost set, the processing module is specifically configured to: if a second traveling strategy in a feasible strategy pair corresponding to a target cost is that the passive party only preempts the active party, determine that the target traveling strategy is that the target vehicle preempts the target object, where the target cost is the lowest execution cost in the first cost set; if a second traveling strategy in a feasible strategy pair corresponding to a target cost is that the passive party only yields to the active party, determine that the target traveling strategy is that the target vehicle yields to the target object; or if a second traveling strategy in a feasible strategy pair corresponding to a target cost is that the passive party is capable of both preempting the active party and yielding to the active party, determine that the target traveling strategy is that the target vehicle yields to the target object.

In a possible implementation, the execution cost associated with the feasible strategy pair includes one or more of the following: a comfort cost, representing a comfort degree during execution of the feasible strategy pair; a pass cost, representing efficiency of the active party and/or the passive party passing through a conflict point between the active party and the passive party; an offset cost, representing an evaluation of an offset that occurs when the active party executes a corresponding traveling strategy and/or an evaluation of an offset that occurs when the passive party executes a corresponding traveling strategy; an inconsistency cost, representing an evaluation of a deviation between a traveling behavior of the target object in the feasible strategy pair and an actual traveling behavior of the target object; or a decision punishment cost, representing an evaluation of whether an intention of the passive party is clear.

In a possible implementation, when determining, for any first strategy pair in all the feasible strategy pairs, a comfort cost associated with the first strategy pair, the processing module is specifically configured to: determine, based on an acceleration corresponding to a first traveling strategy in the first strategy pair and a current acceleration of the active party, a first comfort cost generated when the active party executes the first traveling strategy in the first strategy pair; determine, based on an acceleration corresponding to a second traveling strategy in the first strategy pair and a current acceleration of the passive party, a second comfort cost generated when the passive party executes the second traveling strategy in the first strategy pair; and determine, based on the first comfort cost and the second comfort cost, the comfort cost associated with the first strategy pair.

In a possible implementation, when determining, for the any first strategy pair in all the feasible strategy pairs, a pass cost associated with the first strategy pair, the processing module is specifically configured to: determine, based on first time and second time, a first pass cost generated when the active party executes the first traveling strategy in the first strategy pair, where the first time is time for the active party to pass through a target point when the first traveling strategy in the first strategy pair is executed, the second time is time for the active party to pass through the target point at a current speed and the current acceleration of the active party, and the target point is a conflict point between a traveling path of the active party and a traveling path of the passive party; determine, based on third time and fourth time, a second pass cost generated when the passive party executes the second traveling strategy in the first strategy pair, where the third time is time for the passive party to pass through the target point when the second traveling strategy in the first strategy pair is executed, and the fourth time is time for the passive party to pass through the target point at a current speed and the current acceleration of the passive party; and determine, based on the first pass cost and the second pass cost, the pass cost associated with the first strategy pair.

In a possible implementation, when determining, for the any first strategy pair in all the feasible strategy pairs, an offset cost associated with the first strategy pair, the processing module is specifically configured to: determine, based on an offset generated when the active party executes the first traveling strategy in the first strategy pair and a preset mapping relationship between an offset and an offset cost, a first offset cost generated when the active party executes the first traveling strategy in the first strategy pair; determine, based on an offset generated when the passive party executes the second traveling strategy in the first strategy pair and the preset mapping relationship between the offset and the offset cost, a second offset cost generated when the passive party executes the second traveling strategy in the first strategy pair; and determine, based on the first offset cost and the second offset cost, the offset cost associated with the first strategy pair.

In a possible implementation, when determining, for the any first strategy pair in all the feasible strategy pairs, an inconsistency cost associated with the first strategy pair, the processing module is specifically configured to: when a traveling strategy of the target object in the first strategy pair is only preempting the target vehicle or only yielding to the target vehicle, determine a target probability of the target object for preempting the target vehicle, and determine the inconsistency cost based on the target probability; or when a traveling strategy of the target object in the first strategy pair is that both preempting the target vehicle and yielding to the target vehicle are available, determine that the inconsistency cost is a preset cost value.

In a possible implementation, when determining, for the any first strategy pair in all the feasible strategy pairs, a decision punishment cost associated with the first strategy pair, the processing module is specifically configured to: determine, according to a preset decision punishment rule and the second traveling strategy in the first strategy pair, the decision punishment cost associated with the first strategy pair.

In a possible implementation, the second traveling strategy in the first strategy pair is that the passive party is capable of both preempting the active party and yielding to the active party. When determining, according to the preset decision punishment rule and the second traveling strategy in the first strategy pair, the decision punishment cost associated with the first strategy pair, the processing module is specifically configured to: determine a first decision punishment cost according to the decision punishment rule and the second traveling strategy in the first strategy pair; determine, based on the acceleration corresponding to the first traveling strategy in the first strategy pair and the current acceleration of the active party, a second decision punishment cost generated when the active party executes the first traveling strategy in the first strategy pair; and determine, based on the first decision punishment cost and the second decision punishment cost, the decision punishment cost associated with the first strategy pair.

According to a third aspect, this application provides a vehicle, including the control apparatus described in any one of the second aspect or the possible implementations of the second aspect.

According to a fourth aspect, this application provides a computer-readable storage medium, where the computer-readable storage medium stores a computer program. When the computer program is run on a processor, the processor is enabled to perform the method described in any one of the first aspect or the possible implementations of the first aspect.

According to a fifth aspect, this application provides a computer program product. When the computer program product runs on a processor, the processor is enabled to perform the method described in any one of the first aspect or the possible implementations of the first aspect.

It should be understood that, for beneficial effect of the second aspect to the fifth aspect, refer to related descriptions in the first aspect. Details are not described herein again.

### BRIEF DESCRIPTION OF DRAWINGS

The following briefly describes the accompanying drawings used in descriptions of embodiments or the conventional technology.
FIG. 1 is a diagram of application scenarios according to an embodiment of this application;
FIG. 2 shows a hardware structure of a vehicle according to an embodiment of this application;
FIG. 3 is a schematic flowchart of a control method according to an embodiment of this application;
FIG. 4 is a diagram of intersection of vehicles according to an embodiment of this application;
FIG. 5 is a diagram of a comfort cost function according to an embodiment of this application;
FIG. 6 is a diagram of a pass cost function according to an embodiment of this application;
FIG. 7 is a diagram of a decision punishment cost function according to an embodiment of this application; and
FIG. 8 is a diagram of a structure of a control apparatus according to an embodiment of this application.

### DESCRIPTION OF EMBODIMENTS

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In the specification and claims of this application, the terms "first", "second", and the like are used for distinguishing between different objects, but are not used for describing a particular order of the objects. For example, a first response message, a second response message, and the like are used for distinguishing between different response messages, but are not used for describing a particular order of the response messages.

In embodiments of this application, the word "example", "for example" or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

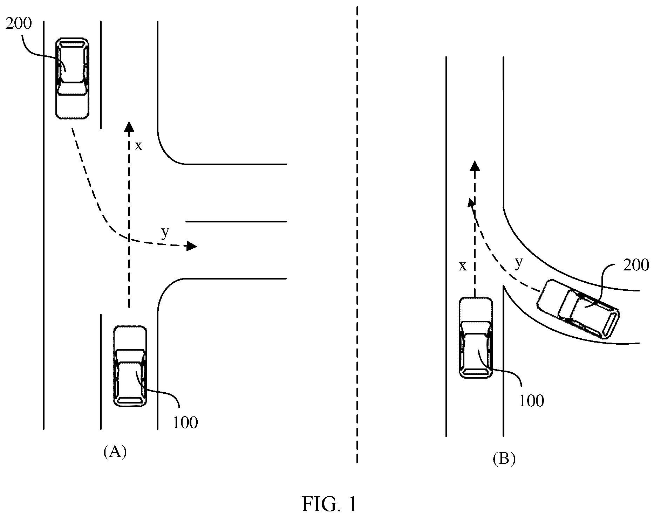

For example, FIG. 1 shows application scenarios. As shown in (A) of FIG. 1, a vehicle 100 and a vehicle 200 travel to a T-shaped road junction, the vehicle 100 travels in a direction identified by a line segment x, and the vehicle 200 moves in a direction identified by a line segment y. In (B) of FIG. 1, a vehicle 200 moves to a road on which a vehicle 100 is located, the vehicle 100 travels in a direction identified by a line segment x, and the vehicle 200 moves in a direction identified by a line segment y. In (A) or (B) in FIG. 1, because line segments x and y intersect, that is, traveling trajectories of the vehicle 100 and the vehicle 200 conflict, there is a possibility of collision between the vehicle 100 and the vehicle 200. It should be understood that FIG. 1 shows only two cases in which there is a possibility of collision between vehicles, and another case in which there is a possibility of collision between vehicles due to a conflict between driving trajectories of the vehicles still falls within the protection scope of this application.

In addition, in the scenarios shown in FIG. 1, the vehicle 100 may be reserved, and the vehicle 200 may be replaced with another object, for example, a moving object or a static object. A solution after replacement still falls within the protection scope of this application. Similarly, the vehicle 200 may be reserved, and the vehicle 100 may be replaced with another object, for example, a moving object or a static object. A solution after replacement still falls within the protection scope of this application. For ease of description, the following uses an example in which the vehicle 100 is reserved for description.

Generally, when there is a conflict between a traveling trajectory of a vehicle and a traveling trajectory of another object (for example, a moving object or a static object), only two strategies, namely, a preemption strategy and a yielding strategy, are generally determined. However, such a "black or white" preemption or yielding decision may bring a decision change, and cause a case like hard braking/cadence braking or even takeover of a vehicle, resulting in poor driving experience. For example, the traveling trajectory of the another object may be but is not limited to a traveling trajectory predicted by the vehicle. For example, when the another object is the static object, the vehicle may predict a moving trajectory for the object; or when the another object is the moving object, the vehicle may predict a moving trajectory for the object.

In view of this, embodiments of this application provide a control method. When there is a possibility of collision between a traveling trajectory of a vehicle and a traveling trajectory of another object (for example, a moving object or a static object), the vehicle and the another object may be classified into an active party and a passive party, and the active party has a passage priority relative to the passive party. Then, the vehicle may be controlled to probe an intention of the another object, and make a final preemption or yielding decision when it is determined that the intention of the another object is clear. This implements effect of slow acceleration for preemption or slow deceleration for yielding, and improves driving experience.

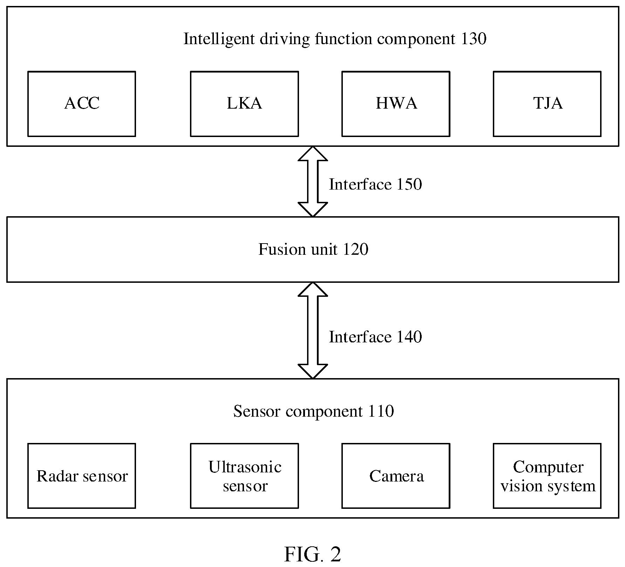

For example, FIG. 2 shows a hardware structure of a vehicle. As shown in FIG. 2, the vehicle 100 may include a sensor component 110, a fusion unit 120, and an intelligent driving function component 130. The sensor component 110 is connected to the fusion unit 120 through an interface 140, and the fusion unit 120 is connected to the intelligent driving function component 130 through an interface 150.

The sensor component 110 may include a vehicle posture sensor, a perception sensor, and/or the like. Data collected by the sensor component 110 may be transmitted to the fusion unit 120 through the interface 140. The vehicle posture sensor may obtain traveling status information of the vehicle 100, such as a speed, an acceleration, a heading angle, and a road topology, and obtain external environment information of the vehicle 100, such as road condition information. The perception sensor may obtain information about another object outside the vehicle 100, for example, traveling status information, such as a speed, a heading angle, a position, an orientation, an acceleration, and a road topology. Optionally, the vehicle posture sensor may include one or more of a gyroscope sensor, a radar sensor, an ultrasonic sensor, a camera, a computer vision system, and the like. The radar sensor may include a lidar sensor, a millimeter-wave radar sensor, and/or the like. The perception sensor may include one or more of a camera, a radar sensor, an ultrasonic sensor, and the like.

The radar sensor may be configured to sense an object in an ambient environment of the vehicle 100 by using a radio signal, and may also sense a speed, a traveling direction, and/or the like of the object.

The camera may be configured to capture a plurality of images of the ambient environment of the vehicle. The camera may be a still camera or a video camera.

The computer vision system may operate to process and analyze an image captured by the camera, to recognize objects and/or features in the ambient environment of the vehicle. The objects and/or the features may include a traffic signal, a road boundary, an obstacle, another object, and the like. The computer vision system may use an object recognition algorithm, a structure from motion (Structure from Motion, SFM) algorithm, video tracking, other computer vision technologies, and the like.

The fusion unit 120 may transmit data collected by the sensor component 110 to the intelligent driving function component 130 through the interface 150, so that the intelligent driving function component 130 may implement an intelligent driving function based on the data collected by the sensor component 110.

The intelligent driving function component 130 may receive, through the interface 150, the data that is collected by the sensor component 110 and that is transmitted by the fusion unit 120, then predict a traveling trajectory and the like of another object based on the received data, and/or make a traveling decision, to implement an intelligent driving function, for example, various different intelligent driving/autonomous driving functions such as adaptive cruise control (adaptive cruise control, ACC), lane keeping assist (lane keeping assist, LKA), highway assist HWA (highway assist, HWA), and traffic jam assist (traffic jam assist, TJA).

The interface 140 may implement data transmission between the sensor component 110 and the fusion unit 120, which may be an interface between a sensor and a fusion unit as specified in ISO 130150. The interface 150 may implement data transmission between the fusion unit 120 and the intelligent driving function component 130. Message content transmitted by the interface 150 may include one or more of the following: a speed, a heading angle, historical trajectory information, an acceleration, a road topology of the vehicle 100; a type, a speed, a heading angle, a position, an orientation, an acceleration, a road topology, and the like of another object; time of a collision between the vehicle 100 and the another object; and the like.

In some embodiments, the intelligent driving function component 130 may include an object decision module and a motion planning module. The object decision module may determine, based on the data and the like collected by the sensor component 110, whether the vehicle 100 collides with another traffic participant when the vehicle 100 travels along a reference path. For example, still refer to FIG. 1. The vehicle 100 and the vehicle 200 collide. For example, the reference path may be a reference used by the vehicle to make an object decision, for example, a center line of a current road. The path mainly reflects real map information, and may guide a traveling direction of the vehicle.

In addition, the object decision module may further classify the vehicle 100 and another traffic participant as game objects or non-game objects based on whether the vehicle 100 conflicts with the another traffic participant. The game objects indicate objects that are mutually affected. For example, still refer to FIG. 1. A traveling decision (for example, preempting or yielding) of the vehicle 100 affects a traveling decision of the vehicle 200, and a traveling decision (for example, preempting or yielding) of the vehicle 200 also affects a traveling decision of the vehicle 100. Therefore, the vehicle 100 and the vehicle 200 are game objects. The non-game objects indicate objects that are not mutually affected. For example, in a scenario in which the vehicle 100 travels along with another vehicle, a traveling decision of the vehicle 100 cannot affect a vehicle that is in front of the vehicle 100 and that travels in a same direction. In embodiments of this application, how to make a traveling decision when the vehicle 100 and the another traffic participant are game objects, to avoid a collision conflict between the vehicle 100 and the another traffic participant is mainly described.

The motion planning module may perform horizontal planning and vertical planning based on a traveling decision made by the object decision module. A horizontal plan is a plan that is made in a direction parallel to a reference path (for example, a center line of a lane) and that corresponds to a behavior like obstacle avoidance and bypass of a vehicle. The horizontal plan may have coordinate information, but does not have speed information. A longitudinal plan is a plan that is made in a direction of the reference path and that corresponds to a behavior like acceleration and deceleration of the vehicle. The longitudinal plan may have speed information, but does not have coordinate information. For example, because a traveling trajectory of the vehicle mainly includes the coordinate information and the speed information, the horizontal plan and the vertical plan may jointly form the traveling trajectory of the vehicle.

It may be understood that the structure illustrated in embodiments of this application does not constitute a specific limitation on the vehicle 100. In some other embodiments of this application, the vehicle 100 may include more or fewer components than those shown in the figure, or combine some components, or divide some components, or have different component arrangements. The components shown in the figure may be implemented by hardware, software, or a combination of software and hardware.

The following describes, based on the foregoing content, the control method provided in embodiments of this application.

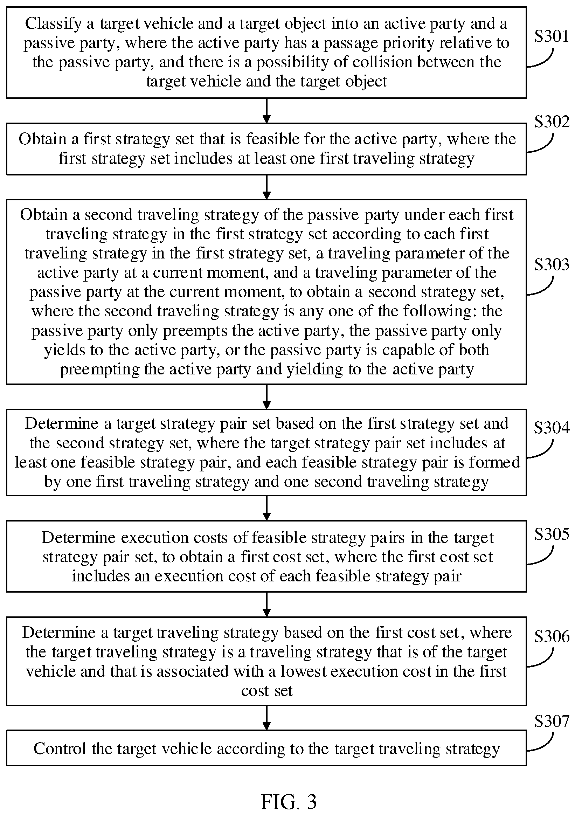

For example, FIG. 3 shows a control method. A vehicle in the method may be but is not limited to the foregoing vehicle 100. A scenario involved in the method may be, but is not limited to, a scenario in which there is a possibility of collision between a traveling route of the vehicle 100 and a traveling route of the vehicle 200 described in FIG. 1, that is, a scenario in which there is a probability of collision between the two vehicles, and certainly, may alternatively be a scenario in which there is a possibility of collision between a traveling route of the vehicle 100 and a traveling route of another object. It may be understood that the method may be performed by any apparatus, device, platform, or device cluster that has computing and processing capabilities. For example, the method may be performed by using a processor in the vehicle 100, a vehicle-mounted terminal, or the like. This is not limited herein. As shown in FIG. 3, the control method may include S301 to S307. Details are as follows:

S301: Classify a target vehicle and a target object into an active party and a passive party, where the active party has a passage priority relative to the passive party, and there is a possibility of collision between the target vehicle and the target object.

In embodiments, after the target vehicle collects information about each traffic participant in an environment, when the target vehicle is aware that there is a possibility of collision between the target vehicle and another traffic participant (hereinafter referred to as a "target object"), the target vehicle may classify the target vehicle and the target object into the active party and the passive party according to a traffic rule. The active party has the passage priority relative to the passive party. For example, still refer to (A) in FIG. 1. According to the traffic rule, a vehicle turning left needs to yield to a vehicle going straight. Therefore, the vehicle 100 is an active party, and the vehicle 200 is a passive party. For another example, when the target vehicle goes straight, and the target object takes a turn, it may be determined that the target vehicle is an active party, and the target object is a passive party. When the target vehicle takes a turn, and the target object goes straight, it may be determined that the target vehicle is a passive party, and the target object is an active party. In some embodiments, the traffic participant in embodiments of this application may be a vehicle, or may be another object. This is not limited herein.

S302: Obtain a first strategy set that is feasible for the active party, where the first strategy set includes at least one first traveling strategy.

In embodiments, the first strategy set may be pre-stored in the target vehicle, may be obtained from a network in real time, or may be calculated in real time. This may specifically depend on an actual situation. This is not limited herein. The first strategy set includes the at least one first traveling strategy. For example, each first traveling strategy may be used to represent at least one piece of feasible information (for example, an acceleration) of the active party in a direction perpendicular to a lane on which the target vehicle is located and one piece of feasible traveling information (for example, an offset) in the direction of the lane.

In some embodiments, the first strategy set may be determined based on at least preset acceleration sampling space, an allowed range of the acceleration of the active party, and a preset horizontal offset range. For example, an intersection set of the preset acceleration sampling space and the allowed range of the acceleration of the active party may be used as a change range of the acceleration in the first strategy set, and the preset horizontal offset range may be used as a change range of a horizontal offset in strategy space. For example, when the target vehicle is an active party, if the preset acceleration sampling space is [-4.0, 3.0] m/s², and the acceleration range allowed by the target vehicle is [-3.0, 2.0] m/s², the change range of the acceleration in the first strategy set is [-3.0, 2.0] m/s². If the preset horizontal offset range is [-1, 1] m, the change range of the horizontal offset in the first strategy set is [-1, 1] m.

Further, a change interval of the acceleration in the first strategy set and an offset interval of a horizontal offset may be set by considering a balance between calculation complexity and strategy space precision. For example, the acceleration may change at an interval of 1 m/s², and the horizontal offset may change at an interval of 1 m.

For example, the change range of the acceleration in the first strategy set is [-3.0, 2.0] m/s², and the change range of the horizontal offset is [-1, 1] m. In this case, the change interval of the acceleration may be set to 1 m/s², and the horizontal offset of the target vehicle may be set to be that when the target vehicle keeps traveling in the center of a current lane, the target vehicle yields leftward (that is, offsets leftward from a lane center line) by 1 m, which is denoted as +1 m, or yields rightward (that is, offsets rightward from the lane center line) by 1 m, which is denoted as -1 m. Finally, the first strategy set shown in Table 1 may be generated. In the strategy set shown in Table 1, one acceleration and one horizontal offset may form one traveling strategy. For example, a traveling strategy formed by an acceleration of 1 m/s² and a horizontal offset of -1 m is traveling at the acceleration of 1 m/s² and a rightward offset of 1 m from the lane center line.

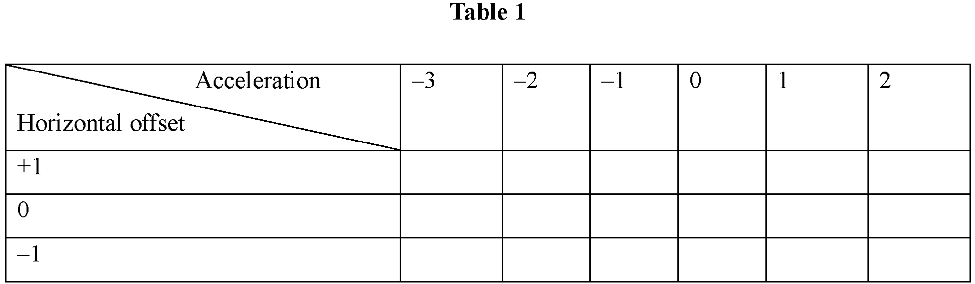

In some embodiments, after the first strategy set is obtained, time domain deduction may be performed on each traveling strategy in the first strategy set, to form a first trajectory set corresponding to traveling strategies that are feasible for the active party. For example, when time domain deduction is performed, a constraint like a system delay (for example, time of transition from one acceleration to another acceleration) of the active party, a speed limit, or the like may be complied with. After the active party accelerates to a road speed limit, deduction is performed at a constant speed of the road speed limit. After deduction is performed on all traveling strategies in the first strategy set, the first trajectory set may be obtained. For example, the first trajectory set may include at least one traveling trajectory, and each traveling strategy in the first strategy set may correspond to one traveling trajectory.

After the first strategy set is obtained, S303 may be performed.

S303: Obtain a second traveling strategy of the passive party corresponding to each first traveling strategy in the first strategy set according to each first traveling strategy in the first strategy set, a traveling parameter of the active party at a current moment, and a traveling parameter of the passive party at the current moment, to obtain a second strategy set, where the second traveling strategy is any one of the following: the passive party only preempts the active party, the passive party only yields to the active party, or the passive party is capable of both preempting the active party and yielding to the active party.

In embodiments, time at which the active party arrives at a position at which the active party collides with the passive party may be calculated based on the traveling parameter (for example, a speed, an acceleration, or a position) of the active party at the current moment and each first traveling strategy. Then, in each first traveling strategy, it is determined, when the passive party travels by using a traveling parameter (for example, a speed, an acceleration, or a position) of the passive party at the current moment as an initial parameter, whether the passive party and the active party can pass through, at a specific time interval and a specific distance interval, a position at which the passive party and the active party collide, and when the passive party and the active party can pass through, at the specific time interval and the specific distance interval, the position at which the passive party and the active party collide, an action that can be performed by the passive party is determined. For example, it is determined that the passive party can only preempt the active party, the passive party can only yield to the active party, the passive party is capable of both preempting the active party and yielding to the active party, or the like. In this way, the second traveling strategy of the passive party corresponding to each first traveling strategy in the first strategy set is obtained, to obtain the second strategy set. The second traveling strategy is any one of the following: the passive party only preempts the active party, the passive party only yields to the active party, or the passive party is capable of both preempting the active party and yielding to the active party. For example, the traveling parameter at the current moment may be, but is not limited to, a traveling parameter observed when the first strategy set is obtained, a traveling parameter observed when the second strategy set is solved, or a traveling parameter recently observed before the method is performed.

In some embodiments, an algorithm like quadratic programming (quadratic programming, QP) may be used to solve parameters such as traveling positions, traveling speeds, accelerations, kinetic constraints, a collision time, and a road rule of the active party and the passive party, to solve a traveling trajectory of acceleration/deceleration/avoidance of the passive party, and determine a traveling strategy of the passive party. For example, a traveling speed, a position, a direction, an acceleration, a road topology, and the like of the target object may be input into a model obtained through pre-training, to predict the traveling trajectory and/or the traveling strategy of the passive party.

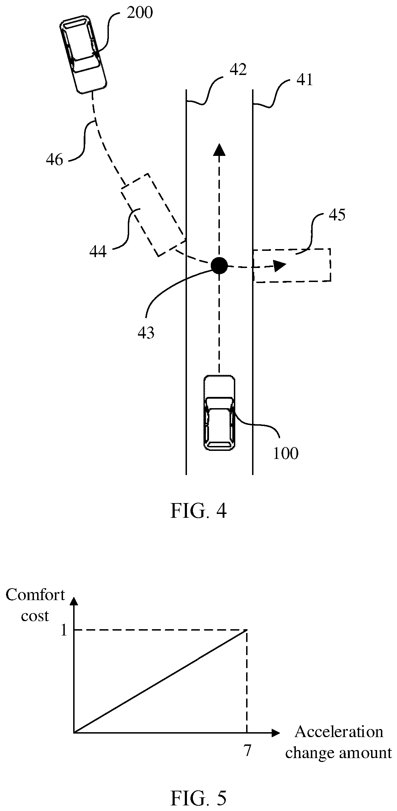

For example, as shown in FIG. 4, the vehicle 100 is an active party, and at a current moment, a speed of the vehicle 100 is 17 km/h, a current observed acceleration of the vehicle 100 is -0.67 m/s², and a road speed limit is 60 km/h. A traveling strategy in which an acceleration of the vehicle 100 is 1 m/s² and a horizontal offset of the vehicle 100 is 0 m is used as an example. A feasible trajectory 46 of the vehicle 200 (namely, the passive party) may be obtained through QP solving. In this case, a distance from the vehicle 100 to a trajectory conflict point 43 is 20.11 m. When the vehicle 100 travels at an acceleration of 1 m/s², time for reaching the conflict point is eTTC=3.51s.

An area whose width is a sum of a width of 1.9 m of the vehicle 100 and widths of 0.5 m from the left side and the right side of the vehicle 100 is used as a safe channel of the vehicle 100 (namely, an area formed by lines 41 and 42). When the vehicle 200 travels along a predicted path (namely, a feasible trajectory 46) of the vehicle 200, a point at which the vehicle 200 starts to intrude the safe channel of the vehicle 100 is used as an intrusion point (that is, when the vehicle 200 is located at a position 44), and a point at which the vehicle 200 completely leaves the safe channel of the vehicle 100 is used as a departure point (that is, when the vehicle 200 is located at a position 45).

In this case, a condition for the vehicle 200 to safely preempt the vehicle 100 and safely yield to the vehicle 100 is as follows: When the vehicle 200 yields to the vehicle 100, time at which the vehicle 200 arrives at the intrusion point needs to be after, for a period of time, time at which the vehicle 100 passes through the trajectory conflict point 43. When the vehicle 200 preempts the vehicle 100, time at which the vehicle 200 arrives at the departure point needs to be before, for a period of time, time at which the vehicle 100 arrives at the trajectory conflict point 43. For example, different safe time intervals may be preset for safe preempting/yielding time intervals of the vehicle 200 based on different scenarios. For example, the safe time interval may be 1s. To be specific, if the vehicle 200 preempts the vehicle 100, the vehicle 200 needs to leave the safe channel in which the vehicle 100 is located within 2.41s. If the vehicle 200 yields to the vehicle 100, the vehicle 200 needs to enter the safe channel in which the vehicle 100 is located after 4.41s.

A distance from the vehicle 200 to a trajectory intersection point 43 is 11.92 m, an observed acceleration of the vehicle 200 is 0.0 m/s², and a current speed of the vehicle 200 is 17 km/h. The width of the safe channel in which the vehicle 100 is located and a road topology angle of the vehicle 200 are considered, so that it may be obtained that a distance between the intrusion point position 44 of the vehicle 200 and a current position of the vehicle 200 is 7.63 m, and a distance between the departure point position 45 of the vehicle 200 and the current position of the vehicle 200 is 13.4 m. In this case, when the traveling strategy of the vehicle 200 is solved, if a QP (quadratic programming) method is used, when a yielding strategy is solved, a maximum displacement constraint within 4.41s is 7.63 m, and when the preemption strategy is solved, a minimum displacement constraint within 2.41s is 13.4 m. Maximum and minimum acceleration constraints and a maximum speed constraint that are used in the solving process may be set based on a kinetic constraint and a traffic rule constraint of the vehicle 200.

According to a traveling strategy in which an acceleration of the vehicle 100 is 1 m/s² and a horizontal offset of the vehicle 100 is 0 m, solutions that meet the foregoing conditions and in which the vehicle 200 yields to the vehicle 100 and preempts the vehicle 100 may be obtained through solving at the same time. In other words, in this case, the vehicle 200 may preempt the vehicle 100, or may yield to the vehicle 100. In this case, an intention of the vehicle 200 is unclear.

For remaining traveling strategies of the vehicle 100, traveling strategies corresponding to the vehicle 200 are solved. When a traveling strategy of the vehicle 100 is: a horizontal offset of 0 m and an acceleration of 2 m/s², a strategy that the vehicle 200 yields to the vehicle 100 may be obtained through solving. However, a strategy that the vehicle 200 preempts the vehicle 100 cannot meet a safety staggering constraint condition and another constraint regardless of whether the vehicle 200 is offset, and therefore a feasible solution cannot be obtained through solving. In this case, the vehicle 200 can only yield to the vehicle 100. In this case, the intention of the vehicle 200 is clear. When the traveling strategy of the vehicle 100 is: a horizontal offset of 0 m and an acceleration of -3 m/s², only a strategy that the vehicle 200 preempts the vehicle 100 can be obtained through solving. Therefore, in this case, the vehicle 200 can only preempt the vehicle 100. In this case, the intention of the vehicle 200 is clear. When the traveling strategy of the vehicle 100 is: horizontal offset + 1 m (offset to the left), and an acceleration of 1 m/s², a strategy that the vehicle 200 preempts or yields to the vehicle 100 and that meets the constraint condition cannot be obtained through solving regardless of whether the vehicle 200 is offset. Therefore, there is no solution in this case, that is, the vehicle 100 cannot be safely preempted or yielded to. After all traveling strategies of the vehicle 200 are obtained through solving, an obtained second strategy set may be shown in Table 2 below. In Table 2, content other than a first column and a first row is the second strategy set of the vehicle 200 (namely, the passive party). For example, with reference to Table 2, when a traveling strategy of the active party is "traveling with a horizontal offset of 1 m and an acceleration of -3 m/s²", a traveling strategy of the passive party is "preempting the active party", that is, the passive party can only preempt the active party. When the traveling strategy of the active party is "traveling with a horizontal offset of 0 m and an acceleration of 1 m/s²", the traveling strategy of the passive party is "preempting and yielding to the active party", that is, the passive party is capable of both preempting the active party and yielding to the active party. When the traveling strategy of the active party is "traveling with a horizontal offset of 1 m and an acceleration of 1 m/s²", the passive party cannot avoid collision with the active party. In this case, the traveling strategy of the passive party cannot be obtained through solving, that is, there is "no solution".

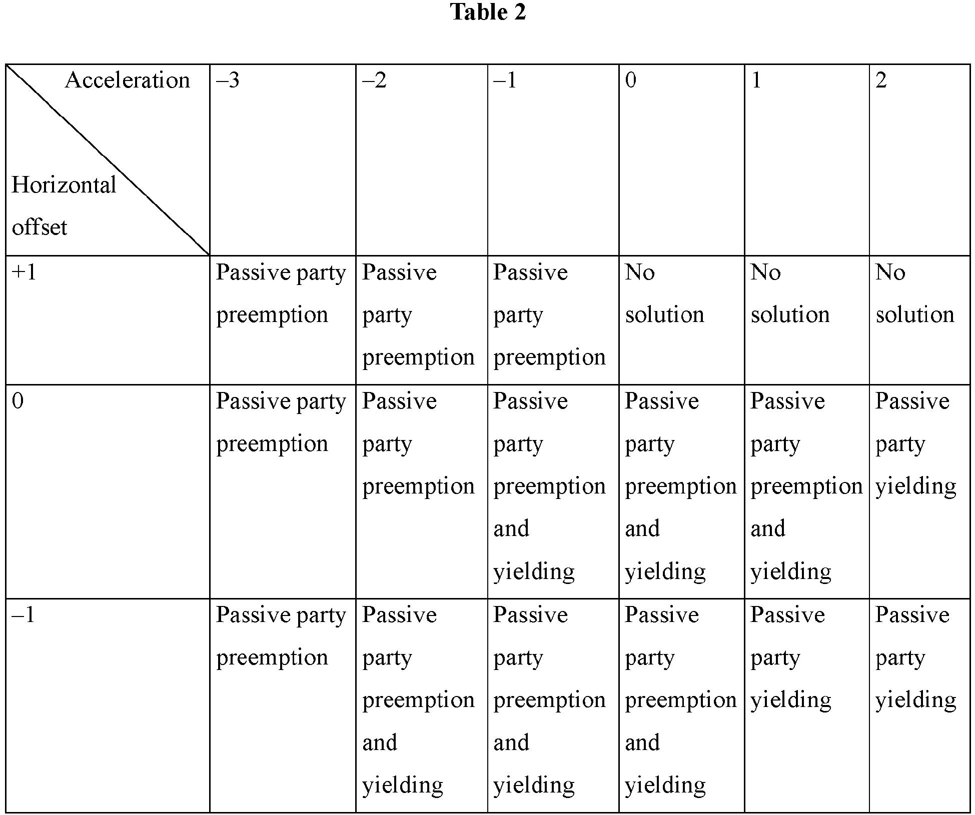

In some embodiments, in the process of obtaining the second strategy set based on the first strategy set, the traveling parameter of the active party at the current moment, and the traveling parameter of the passive party at the current moment, time domain deduction may be performed on traveling trajectories of the passive party based on traveling trajectories corresponding to traveling strategies in the first strategy set and a condition that needs to be met when the passive party safely preempts and/or yields to the active party, to form a second trajectory set corresponding to the traveling strategies that are feasible for the passive party. For example, when time domain deduction is performed, a constraint like a system delay (for example, time of transition from one acceleration to another acceleration) of the passive party, a speed limit, or the like may be complied with. After the passive party accelerates to a road speed limit, deduction is performed at a constant speed of the road speed limit. After deduction is performed on all the traveling strategies in the second strategy set, the second trajectory set may be obtained. For example, the second trajectory set may include at least one traveling trajectory, and each traveling strategy in the second strategy set may correspond to one traveling trajectory.

After the second strategy set is obtained, S304 may be performed.

S304: Determine a target strategy pair set based on the first strategy set and the second strategy set, where the target strategy pair set includes at least one feasible strategy pair, and each feasible strategy pair is formed by one first traveling strategy and one second traveling strategy.

In embodiments, after the first strategy set and the second strategy set are obtained, the target strategy pair set may be determined based on the two strategy sets, where the target strategy pair set includes at least one feasible strategy pair, and each feasible strategy pair is formed by one first traveling strategy and one second traveling strategy. For example, still with reference to Table 2, the traveling strategy "the active party travels with a horizontal offset of 1 m and an acceleration of -3 m/s²" and the traveling strategy "the passive party preempts the active party" may form a feasible strategy pair, and the traveling strategy "the active party travels with a horizontal offset of 0 m and an acceleration of 1 m/s²" and the traveling strategy "the passive party preempts and yields to the active party" may form a feasible strategy pair.

In addition, when the passive party has a safe traveling strategy that both preempting the active party and yielding to the active party are available, a feasible strategy pair including the traveling strategy may be referred to as a bilateral solution strategy pair. For example, still with reference to Table 2, a feasible strategy pair formed by the traveling strategy "the active party travels with a horizontal offset of 0 m and an acceleration of 1 m/s²" and the traveling strategy "the passive party preempts and yields to the active party" may be referred to as a bilateral solution strategy pair. When the passive party can only obtain, through solving, a safe traveling strategy of preempting or yielding to the active party, a feasible strategy pair including the traveling strategy may be referred to as a unilateral solution strategy pair. For example, still with reference to Table 2, a feasible strategy pair formed by the traveling strategy "the active party travels with a horizontal offset of 1 m and an acceleration of -3 m/s²" and the traveling strategy "the passive party preempts the active party" may be referred to as a unilateral solution strategy pair.

S305: Determine execution costs of feasible strategy pairs in the target strategy pair set, to obtain a first cost set, where the first cost set includes an execution cost of each feasible strategy pair.

In embodiments, the execution costs of the feasible strategies in the target strategy pair set may be analyzed to obtain the first cost set. The first cost set includes the execution cost associated with each feasible strategy pair. The cost associated with each feasible strategy pair indicates a cost of executing the feasible strategy pair.

In embodiments, the execution cost associated with each feasible strategy pair may include one or more of the following: a comfort cost, a pass cost, an offset cost, an inconsistency cost, or a decision punishment cost.

The following describes each cost.

### (1) Comfort cost

The comfort cost represents a comfort degree generated when a feasible strategy pair is executed. A higher comfort cost indicates a lower comfort degree. In some embodiments, a smaller acceleration change rate of the active party or the passive party indicates better corresponding comfort, and a smaller comfort cost.

In embodiments, for any feasible strategy pair, an acceleration variation generated when the active party executes a corresponding traveling strategy at a current acceleration of the active party may be processed based on a preset comfort cost function, to obtain a comfort cost generated when the active party executes the corresponding traveling strategy. Similarly, an acceleration variation generated when the passive party executes a corresponding traveling strategy at a current acceleration of the passive party may be processed based on the preset comfort cost function, to obtain a comfort cost generated when the passive party executes the corresponding traveling strategy. Finally, weighted summation may be performed on the comfort cost of the active party and the comfort cost of the passive party (certainly, another calculation manner, for example, a binary choice or averaging, may alternatively be used, which is not limited herein), to obtain a comfort cost associated with the corresponding feasible strategy pair. For example, the current acceleration of the active party may be, but is not limited to, an acceleration of the active party observed when the first strategy set is obtained, an acceleration of the active party observed when the second strategy set is solved, or an acceleration of the active party recently observed before the method is executed.

For example, the preset comfort cost function is shown in FIG. 5, that is, y=0.1429x, where x is a horizontal axis, and y is a vertical axis. In addition, the vehicle 100 described in FIG. 1 is the active party, the vehicle 200 is the passive party, a current observed acceleration of the vehicle 100 is -0.67 m/s², and a current observed acceleration of the vehicle 200 is 0 m/s². In addition, the first strategy set may be shown in Table 1, and the second strategy set may be shown in Table 2. In this case, in a traveling strategy in which an acceleration corresponding to the vehicle 100 is 1 m/s² and a horizontal offset is 0 m, a traveling strategy corresponding to the vehicle 200 is preempting and yielding. In addition, when the traveling strategy corresponding to the vehicle 200 is preempting, an acceleration of the vehicle 200 is 1.45 m/s². When the traveling strategy corresponding to the vehicle 200 is yielding, the acceleration of the vehicle 200 is 0.69 m/s².

For the vehicle 100, under the feasible strategy pair, an acceleration variation of the vehicle 100 is eDeltaAcc=1-(-0.67)=1.67 m/s². With reference to the comfort cost function shown in FIG. 5, it may be determined that a comfort cost of the vehicle 100 is eComfCost=0.92×(1.67/7)=0.2205. Here, 0.92 is a weight of the comfort cost of the vehicle 100, and the value may be set based on an actual situation.

For the vehicle 200, because there is a bilateral solution (that is, the vehicle 100 may be preempted, or the vehicle 100 may be yielded to) under the feasible strategy pair, a comfort cost of the vehicle 200 is an average of comfort costs corresponding to a preemption solution and a yielding solution (certainly, another calculation manner, for example, summation or a binary choice, may alternatively be used, which is not limited herein). An acceleration variation corresponding to the preemption solution is oDeltaAcc=1.45-0=1.45 m/s², and in this case, a comfort cost is oComfCost=1.45/7=0.2071. An acceleration variation corresponding to the yielding solution is oDeltaAcc=0.69-0=0.69 m/s², and in this case, a comfort cost is oComfCost=0.69/7=0.0986. A final comfort cost of the vehicle 200 is oComfCost=1×(0.2071+0.0986)/2=0.1529 under the feasible strategy pair. Here, 1 is a weight of the comfort cost of the vehicle 200, and the value may be set based on an actual situation.

Further, a comfort cost associated with the feasible strategy pair may be determined as oComfCost=0.2205+0.1592=0.3797. In this case, weights of the active party and the passive party are both 1, and certainly may alternatively be other values. This is not limited herein. For a comfort cost associated with another feasible strategy pair, refer to the foregoing calculation manner. Details are not described herein again.

### (2) Pass cost

The pass cost represents efficiency of the active party and/or the passive party passing through a conflict point between the active party and the passive party (namely, a conflict point between traveling paths of the active party and the passive party). Shorter time for passing through the conflict point indicates a smaller corresponding pass cost.

In embodiments, for any feasible strategy pair, time for the active party to pass through the corresponding conflict point when a traveling strategy in the feasible strategy pair is executed (which may also be referred to as "first time") and time for the active party to pass through the corresponding conflict point at a current acceleration and speed (which may also be referred to as "second time") may be processed based on a preset pass cost function, to obtain a pass cost generated when the active party executes the corresponding traveling strategy. Similarly, time for the passive party to pass through the corresponding conflict point when a traveling strategy in the feasible strategy pair is executed (which may also be referred to as "third time") and time for the passive party to pass through the corresponding conflict point at a current acceleration and speed (which may also be referred to as "fourth time") may be processed based on the preset pass cost function, to obtain a pass cost generated when the passive party executes the corresponding traveling strategy. Finally, weighted summation may be performed on the pass cost of the active party and the pass cost of the passive party (certainly, another calculation manner, for example, a binary choice or averaging, may alternatively be used, which is not limited herein), to obtain a pass cost associated with the corresponding feasible strategy pair.

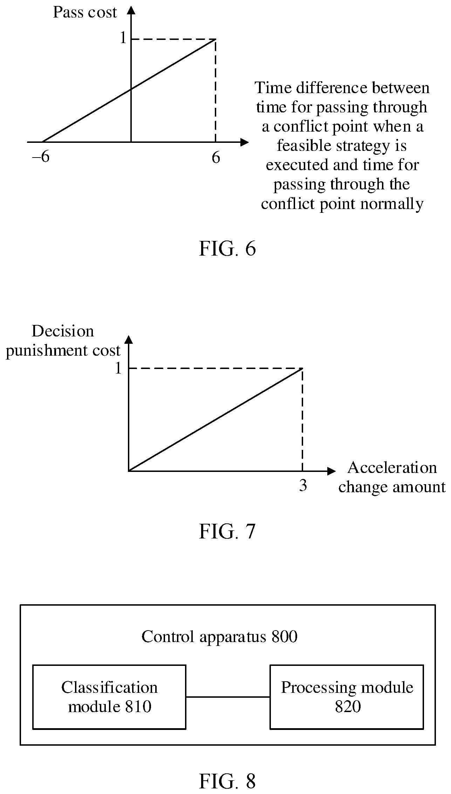

For example, if the preset pass cost function is shown in FIG. 6, that is, y=0.0833x+0.5, where x is a horizontal axis, y is a vertical axis, and the horizontal axis in FIG. 6 indicates a time difference between time for passing through the conflict point when the traveling strategy is executed and time for passing through the conflict point normally (that is, when the traveling strategy is not executed). In addition, the vehicle 100 described in FIG. 1 is an active party, and the vehicle 200 is a passive party. In addition, in a deduction process, if time for the vehicle 100 to pass through the conflict point (which may also be referred to as a "collision point") at a current acceleration and speed is eRealPassTime=4.47s, and time for the vehicle 200 to pass through the conflict point at a current acceleration and speed is oRealPassTime=2.52s. In addition, the first strategy set may be shown in Table 1, and the second strategy set may be shown in Table 2. In this case, in a traveling strategy in which an acceleration corresponding to the vehicle 100 is 1 m/s2 and a horizontal offset is 0 m, a traveling strategy corresponding to the vehicle 200 is preempting and yielding.

In the deduction process, if time for the vehicle 100 to pass through the conflict point is eSamplePassTime=3.41s in the traveling strategy, a time difference between the time and the time for the vehicle 100 to pass through the conflict point normally is eDeltaPassTime=eSamplePassTime-eRealPassTime=3.41-4.47=-1.06. With reference to FIG. 6, it may be determined that a pass cost of the vehicle 100 under the feasible strategy pair is ePassCost=1×(0.0833×(-1.06)+0.5)=0.4117. Here, 1 is a weight of the pass cost of the vehicle 100, and the value may be set based on an actual situation.

In the deduction process, if time for the vehicle 200 to perform yielding and pass through the conflict point is oSamplePassTime=5.02s in the traveling strategy corresponding to the vehicle 100, a pass time difference between the time and time for the vehicle 200 to pass through the conflict point normally is oDeltaPassTime=oSamplePassTime-oRealPassTime=5.02-2.52=2.5s, and a pass cost of the vehicle 200 generated when the vehicle 200 performs yielding is oPassCost=0.0833×2.5+0.5=0.708. If time for the vehicle 200 to perform preemption and pass through the conflict point is oSamplePassTime=2.3s, a pass time difference between the time and the time for the vehicle 200 to pass through the conflict point normally is oDeltaPassTime=oSamplePassTime-oRealPassTime=2.3-2.52=-0.22, and a pass cost of the vehicle 200 generated when the vehicle 200 performs preemption is oPassCost=0.0833×(-0.22)+0.5=0.4817. A final pass cost of the vehicle 200 is oPassCost=1×(0.708+0.4871)/2=0.5976 under the feasible strategy pair. Here, 1 is a weight of the pass cost of the vehicle 200, and the value may be set based on an actual situation. It should be understood that, when the final pass cost of the vehicle 200 in the feasible strategy pair is determined based on the pass cost corresponding to the preemption solution of the vehicle 200 and the pass cost corresponding to the yielding solution of the vehicle 200, another calculation manner, for example, summation or a binary choice, may alternatively be used, which is not limited herein.

Further, a pass cost associated with the feasible strategy pair may be determined as oComfCost=0.4117+0.5976=1.0093. In this case, weights of the active party and the passive party are both 1, and certainly may alternatively be other values. This is not limited herein. For a pass cost associated with another feasible strategy pair, refer to the foregoing calculation manner. Details are not described herein again.

### (3) Offset cost

The offset cost represents an evaluation of an offset that occurs when the active party executes a corresponding traveling strategy and/or an evaluation of an offset that occurs when the passive party executes a corresponding traveling strategy. When no offset is required, an offset cost is 0. Certainly, another value may alternatively be used. This is not limited herein. When an offset is required, an offset cost generated when the active party executes a corresponding traveling strategy may be determined based on an offset generated when the active party executes the corresponding traveling strategy and a preset mapping relationship between an offset and an offset cost, and/or an offset cost generated when the passive party executes a corresponding traveling strategy may be determined based on an offset generated when the passive party executes a corresponding traveling strategy and the preset mapping relationship between the offset and the offset cost. Finally, an offset cost associated with a feasible strategy pair may be obtained based on the determined offset cost generated when the active party executes the corresponding traveling strategy and the determined offset cost generated when the passive party executes the corresponding traveling strategy.

For example, if the offset is 0 m, the offset cost is 0. If the offset is 1 m or -1 m, the offset cost is 0.3. Still refer to FIG. 1. If the vehicle 100 is an active party, the vehicle 200 is a passive party, a traveling strategy corresponding to the vehicle 100 is a traveling strategy in Table 1, and a traveling strategy corresponding to the vehicle 200 is a traveling strategy in Table 2, in a traveling strategy in which an acceleration of the vehicle 100 is 1 m/s² and a horizontal offset is 0 m, an offset cost of the vehicle 100 is eOffsetCost=0. In a deduction process, if the vehicle 200 does not need to be offset in the traveling strategy, a bilateral solution can be obtained through solving, and an offset cost of the vehicle 200 is oOffsetCost=0.

Further, an offset cost associated with a feasible strategy pair may be determined as oComfCost=0+0=0. Certainly, another calculation manner, for example, a binary choice or averaging, may alternatively be used, which is not limited herein. In this case, weights of the active party and the passive party are both 1, and certainly may alternatively be other values. This is not limited herein. For an offset cost associated with another feasible strategy pair, refer to the foregoing calculation manner. Details are not described herein again.

### (4) Inconsistency cost

The inconsistency cost represents an evaluation of a deviation between a traveling behavior of a target object in a feasible strategy pair and an actual traveling behavior of the target object. It is mainly determined by using a probability of the passive party for preempting the active party as an input. For the probability of the passive party for preempting the active party, relative positions and relative speeds of the passive party and the active party, a speed, a position, an acceleration, historical observation data, and the like of the passive party may be input into a preset model, to obtain the probability of the passive party for preempting the active party.

In embodiments, when a traveling strategy of the passive party is solved, if a bilateral solution can be obtained through solving, an inconsistency cost may be 0.5, or certainly may be another value. This is not limited herein. When only one solution can be obtained through solving, and the solution is preemption, the inconsistency cost may be: 1-the probability of the passive party for preempting the active party. When only one solution can be obtained through solving, and the solution is yielding, the inconsistency cost may be the probability of the passive party for preempting the active party. In other words, when a traveling strategy of the target object in a strategy pair is only preempting the target vehicle or only yielding to the target vehicle, a target probability of the target object for preempting the target vehicle may be first determined, and then an inconsistency cost associated with the strategy pair is determined based on the target probability. When a traveling strategy of the target object in a strategy pair is that both preempting and yielding to the target vehicle are available, it may be determined that an inconsistency cost associated with the strategy pair is a preset cost value.

For example, a probability of the passive party for preempting the active party is 0.7. In addition, the vehicle 100 described in FIG. 1 is the active party, the vehicle 200 is the passive party, the first strategy set may be shown in Table 1, and the second strategy set may be shown in Table 2.

In this case, in a traveling strategy in which an acceleration corresponding to the vehicle 100 is 1 m/s² and a horizontal offset is 0 m, a traveling strategy corresponding to the vehicle 200 is preempting and yielding, that is, a bilateral solution exists. Therefore, in this case, an inconsistency cost of the vehicle 200 is probCost=0.3×0.5=0.15. Here, 0.3 is an inconsistency cost weight, and the value may be set based on an actual situation.

In a traveling strategy in which an acceleration corresponding to the vehicle 100 is 2 m/s² and a horizontal offset is 0 m, a traveling strategy corresponding to the vehicle 200 can be only yielding. Therefore, in this case, an inconsistency cost of the vehicle 200 is probCost=0.3×0.7=0.21. Here, 0.3 is an inconsistency cost weight, and the value may be set based on an actual situation.

In a traveling strategy in which an acceleration corresponding to the vehicle 100 is -2 m/s² and a horizontal offset is 0 m, a traveling strategy corresponding to the vehicle 200 can be only preempting. Therefore, in this case, an inconsistency cost of the vehicle 200 is probCost=0.3×(1-0.7)=0.09. Here, 0.3 is an inconsistency cost weight, and the value may be set based on an actual situation.

### (5) Decision punishment cost

The decision punishment cost represents an evaluation of whether an intention of the passive party is clear. It may indicate a corresponding punishment cost generated when a traveling strategy of the passive party obtained through solving according to a traveling strategy of the active party is a unilateral solution or a bilateral solution. When there is a bilateral solution in solutions obtained through solving, it indicates that the intention of the passive party is not clear. Therefore, it may be set that a punishment is high when a solution obtained through solving is a unilateral solution, and a punishment is low when a solution obtained through solving is a bilateral solution. For example, decision punishment costs corresponding to a unilateral solution and a bilateral solution may be preset, that is, a decision punishment rule is preset, and then a corresponding decision punishment cost is determined with reference to a traveling strategy of the passive party. For example, a decision punishment cost corresponding to the unilateral solution may be set to 1, and a decision punishment cost corresponding to the bilateral solution may be set to 0.

In addition, when the passive party obtains a bilateral solution through solving, if a difference between an acceleration of the active party in this traveling strategy and a current acceleration of the active party is large, when the traveling strategy is executed, an acceleration change amount of the active party is large, affecting driving experience. Therefore, a punishment of the bilateral solution may be increased. For example, the difference between the acceleration of the active party in the traveling strategy and the current acceleration of the active party may be processed based on a preset punishment cost function, to obtain a decision punishment cost associated with a corresponding feasible strategy pair. Then, a final decision punishment cost is determined based on the determined decision punishment cost and a decision punishment cost corresponding to the passive party.

For example, the preset punishment cost function is shown in FIG. 7, that is, y=0.333x, where x is a horizontal axis, and y is a vertical axis. In addition, the vehicle 100 described in FIG. 1 is the active party, the vehicle 200 is the passive party, the first strategy set may be shown in Table 1, and the second strategy set may be shown in Table 2.

In this case, in a traveling strategy in which an acceleration corresponding to the vehicle 100 is 1 m/s² and a horizontal offset is 0 m, a traveling strategy corresponding to the vehicle 200 is preempting and yielding, that is, a bilateral solution exists. Therefore, a basic punishment is eBasicPunishmentCost=0.

Further, if a current acceleration of the vehicle 100 is -0.67 m/s², an acceleration variation of the vehicle 100 is eDeltaAcc=1-(-0.67)=1.67 m/s². With reference to FIG. 7, the decision punishment cost eDeltaAccPunishmentCost=1×0.333×1.67=0.55 may be obtained. Here, 1 is a decision punishment cost weight, and the value may be set based on an actual situation.

Further, it may be determined that a decision punishment cost of the vehicle 100 in a traveling strategy in which an acceleration is 1 m/s² and a horizontal offset is 0 m is Cost=0+0.55=0.55. Certainly, a weight value may alternatively be set. For example, a weight of a basic punishment cost is 0.4, and a weight of a punishment cost obtained based on an acceleration variation is 0.6. This may be specifically determined based on an actual situation. This is not limited herein.

It should be understood that one or more of the foregoing described costs may be selected. This may be specifically determined based on an actual situation. This is not limited herein. When a plurality of costs are selected, calculation such as weighted summation or averaging may be performed on these costs, and a final result is used as a cost associated with a corresponding feasible strategy pair. In addition, when a traveling strategy in the second strategy set is no solution, a cost associated with a feasible strategy pair corresponding to the traveling strategy may be set to infinity, that is, costs of executing the feasible strategy pair are very high.

For example, the foregoing described five costs are selected as an example, and the foregoing costs are summed, so that a final cost costTotal=0.3797+1.0093+0+0.15+0.55=2.089 that is associated with a feasible strategy pair and that is generated when an acceleration of the active party is 1 m/s² and a horizontal offset is 0 m can be obtained.

In addition, calculation in the foregoing steps is performed on each of feasible strategy pairs formed by Table 1 and Table 2, and a total cost of all the feasible strategy pairs shown in Table 3 may be obtained. In Table 3, content other than the first strategy set and the second strategy set is costs associated with the feasible strategy pairs.

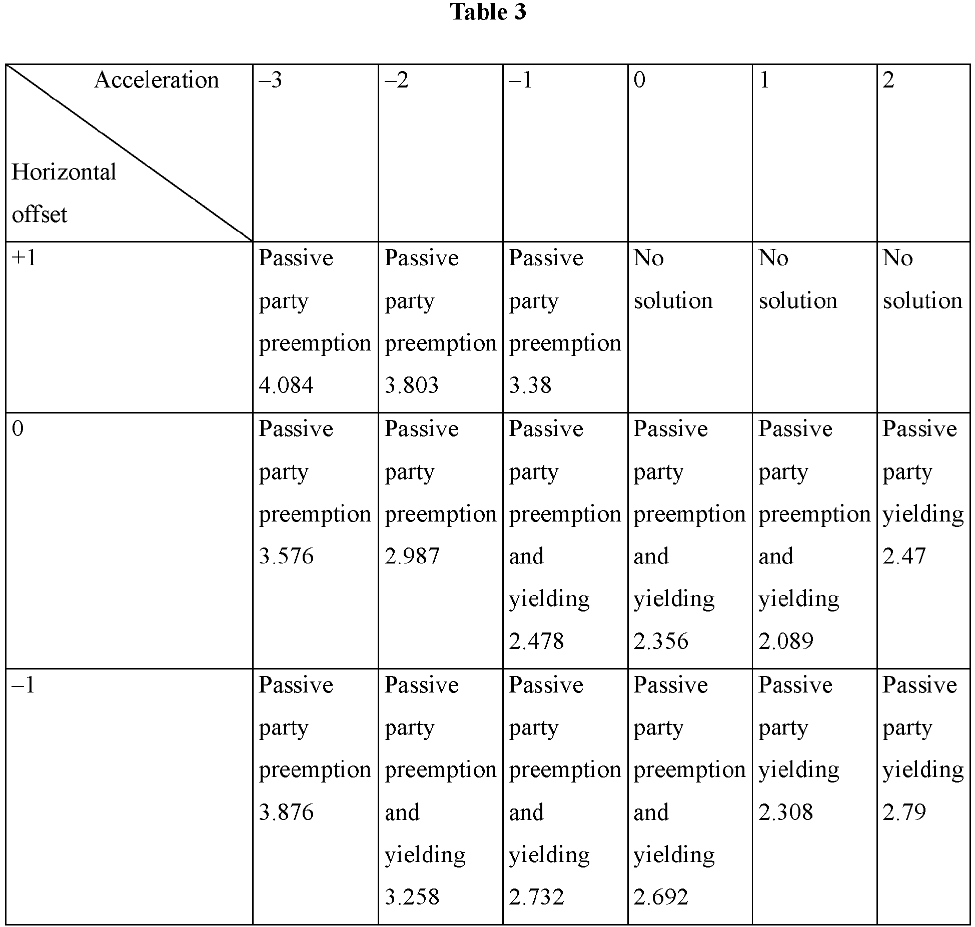

After the first cost set is obtained, S306 may be performed.

S306: Determine a target traveling strategy based on the first cost set, where the target traveling strategy is a traveling strategy that is of the target vehicle and that is associated with a lowest execution cost in the first cost set.

In embodiments, after the first cost set is obtained, the target traveling strategy may be determined based on the first cost set. Because a cost of executing a lowest execution cost in the first cost set is the lowest, a traveling strategy that is of the target vehicle and that is associated with the lowest execution cost in the first cost set may be used as the target traveling strategy.

In a possible implementation, when a second traveling strategy in a feasible strategy pair corresponding to the lowest cost in the first cost set is: the passive party preempts only the active party, or the passive party only yields to the active party, because in this case, regardless of whether the target object is the active party or the passive party, a traveling strategy of the target object is very clear: preemption or yielding, the target vehicle may be controlled to perform a traveling strategy opposite to that of the target object. For example, when the traveling strategy of the target object is preempting the target vehicle, the target vehicle may be controlled to quickly decelerate to yield to the target object. In other words, in this case, the traveling strategy of the target vehicle is yielding to the target object. When the traveling strategy of the target object is yielding to the target vehicle, the target vehicle may be controlled to quickly accelerate to preempt the target object. In other words, in this case, the traveling strategy of the target vehicle is preempting the target object. In this way, the target vehicle quickly responds to a traveling intention of the target object.

In another possible implementation, when the second traveling strategy in the feasible strategy pair corresponding to the lowest cost in the first cost set is: when the passive party is capable of both preempting the active party and yielding to the active party, if the target vehicle is the active party and the target object is the passive party, the traveling intention of the target object is not clear. In other words, the target object is capable of both preempting the target vehicle and yielding to the target vehicle. In this case, if the target vehicle rashly makes a decision of preempting or yielding, a case like hard braking/cadence braking or even takeover is likely to occur, and driving experience is poor. Therefore, in this case, the target vehicle may be controlled according to a first traveling strategy in the feasible strategy pair corresponding to the lowest cost in the first cost set, to probe the traveling intention of the target object. In other words, the first traveling strategy in the feasible strategy pair corresponding to the lowest cost in the first cost set is used as the traveling strategy of the target vehicle. In this case, because the target vehicle is the active party, the target vehicle has a higher passage priority relative to the target object, that is, a right of way of the target vehicle is higher than that of the target object. In addition, in a traveling process, a party with a lower right of way usually needs to yield to a party with a higher right of way. Therefore, the target vehicle may be controlled to travel at an accelerated speed, travel at a decelerated speed, or travel at a constant speed, so as to probe the traveling intention of the target object. In addition, when the target vehicle is controlled to travel at an accelerated speed, or travel at a decelerated speed, to reduce discomfort of a person in the vehicle, a change amount of a speed of the target vehicle may be controlled to be less than a first threshold, so that the target vehicle may slowly accelerate, slowly decelerate, or the like.

In still another possible implementation, when the second traveling strategy in the feasible strategy pair corresponding to the lowest cost in the first cost set is: when the passive party is capable of both preempting the active party and yielding to the active party, if the target vehicle is the passive party and the target object is the active party, the traveling intention of the target object is not clear. In other words, the target object is capable of both preempting the target vehicle and yielding to the target vehicle. In this case, if the target vehicle rashly makes a decision of preempting or yielding, a case like hard braking/cadence braking or even takeover is likely to occur, and driving experience is poor. In addition, in this case, because the target vehicle is the passive party, the target vehicle has a lower passage priority relative to the target object, that is, a right of way of the target vehicle is lower than that of the target object. In addition, in a traveling process, a party with a lower right of way usually needs to yield to a party with a lower right of way. Therefore, the target vehicle may be controlled to travel at a decelerated speed, to probe the traveling intention of the target object. In other words, in this case, the traveling strategy of the target vehicle is yielding to the target object. In addition, when the target vehicle is controlled to travel at a decelerated speed, to reduce discomfort of a person in the vehicle, a change amount of a speed of the target vehicle may be controlled to be less than a second threshold, so that the target vehicle may slowly decelerate.

In other words, when the traveling strategy of the passive party in the feasible strategy pair corresponding to the lowest cost in the first cost set is a unilateral solution and is preempting the active party, a longitudinal decision made by the active party to the passive party is yielding. When the traveling strategy of the passive party in the feasible strategy pair is a unilateral solution and is yielding to the active party, a longitudinal decision made by the active party to the passive party is preempting. When the traveling strategy of the passive party in the feasible strategy pair is a bilateral solution, a longitudinal decision made by the active party to the passive party is critical preemption/yielding. In other words, the two parties continue to play a game. When the traveling strategy of the passive party in the feasible strategy pair is a bilateral solution, a maximum range and a minimum range of avoidance of the target vehicle may be restricted horizontally, and a maximum range and a minimum range of a speed of the target vehicle may be restricted vertically. In other words, bilateral restriction is performed. When the traveling strategy of the passive party in the feasible strategy pair is a unilateral solution, a maximum range or a minimum range of avoidance of the target vehicle is restricted horizontally, and a maximum range or a minimum range of a speed of the target vehicle may be restricted vertically. In other words, unilateral restriction is performed.

S307: Control the target vehicle according to the target traveling strategy.

In embodiments, after the target traveling strategy is determined, the target vehicle may be controlled according to the target traveling strategy. For example, when the target traveling strategy is that the target vehicle preempts the target object, the target vehicle is controlled to preempt the target object. When the target traveling strategy is that the target vehicle yields to the target object, the target vehicle is controlled to yield to the target object. When the target traveling strategy is the traveling strategy that is of the target vehicle and that is associated with the lowest execution cost in the first cost set, the target vehicle is controlled to execute the traveling strategy, and after preset time, one or more steps in S301 to S307 are performed again. The process is cycled until it is determined that the traveling strategy of the target vehicle is only preempting the target object or only yielding to the target object. For example, when the target traveling strategy is the traveling strategy that is of the target vehicle and that is associated with the lowest execution cost in the first cost set, and the traveling strategy is that an acceleration is 1 m/s² and a horizontal offset is 0 m, the target vehicle is controlled to travel at the acceleration of 1 m/s² and the horizontal offset of 0 m.

In this way, when the target vehicle is far away from the target object, the traveling intention of the target object to preempt or yield to the target vehicle is unclear. In this case, the target vehicle may make a critical preemption or yielding decision. In other words, the target vehicle may continue to travel forward and probe the traveling intention of the target object. When the traveling intention of the target object is clear, the target vehicle may perform corresponding adjustment based on the traveling intention of the target object, for example, preempting the target object or yielding to the target object.

Therefore, in an early stage of a game of the active party and the passive party or in a period of time in which an intention of one party is unclear, a planning result of horizontal planning/vertical planning may be accurately controlled based on a bilateral constraint. In addition, with a continuous change of a decision-making constraint from an undetermined bilateral constraint to a determined unilateral constraint, an autonomous driving system can make human-like and flexible continuous decisions in a game scenario. This implements effect of controlling the target vehicle to slowly accelerate or slowly decelerate when the traveling intention of the target object is unclear and effect of controlling the target vehicle to quickly respond to the traveling intention of the target object when the traveling intention of the target object is clear; avoids an incorrect braking/hard braking or a sudden rush emergency takeover of an entire autonomous driving system due to a planning change caused by a decision change in an interaction process in which only a unilateral preemption or yielding decision is made; and improves driving experience.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially performed, or may be completely performed based on an actual situation. This is not limited herein.

According to the method in the foregoing embodiments, an embodiment of this application provides a control apparatus.

For example, FIG. 8 shows a control apparatus. As shown in FIG. 8, the control apparatus 800 may include a classification module 810 and a processing module 820. The classification module 810 is configured to classify a target vehicle and a target object into an active party and a passive party, where the active party has a passage priority relative to the passive party, and there is a possibility of collision between the target vehicle and the target object. The processing module 820 is configured to obtain a first strategy set that is feasible for the active party, where the first strategy set includes at least one first traveling strategy. The processing module 820 is further configured to obtain a second traveling strategy of the passive party corresponding to each first traveling strategy in the first strategy set according to each first traveling strategy in the first strategy set, a traveling parameter of the active party at a current moment, and a traveling parameter of the passive party at the current moment, to obtain a second strategy set, where the second traveling strategy is any one of the following: the passive party only preempts the active party, the passive party only yields to the active party, or the passive party is capable of both preempting the active party and yielding to the active party. The processing module 820 is further configured to determine a target strategy pair set based on the first strategy set and the second strategy set, where the target strategy pair set includes at least one feasible strategy pair, and each feasible strategy pair is formed by one first traveling strategy and one second traveling strategy. The processing module 820 is further configured to determine execution costs of feasible strategy pairs in the target strategy pair set, to obtain a first cost set, where the first cost set includes an execution cost of each feasible strategy pair. The processing module 820 is further configured to determine a target traveling strategy based on the first cost set, where the target traveling strategy is a traveling strategy that is of the target vehicle and that is associated with a lowest execution cost in the first cost set. The processing module 820 is further configured to control the target vehicle according to the target traveling strategy.

In some embodiments, if the target vehicle is the active party, and the target object is the passive party, when determining the target traveling strategy based on the first cost set, the processing module 820 is specifically configured to: if a second traveling strategy in a feasible strategy pair corresponding to a target cost is that the passive party only preempts the active party, determine that the target traveling strategy is that the target vehicle yields to the target object, where the target cost is the lowest execution cost in the first cost set; if a second traveling strategy in a feasible strategy pair corresponding to a target cost is that the passive party only yields to the active party, determine that the target traveling strategy is that the target vehicle preempts the target object; or if a second traveling strategy in a feasible strategy pair corresponding to a target cost is that the passive party is capable of both preempting the active party and yielding to the active party, determine that the target traveling strategy is a first traveling strategy in the feasible strategy pair corresponding to the target cost.

In some embodiments, if the target vehicle is the passive party, and the target object is the active party, when determining the target traveling strategy based on the first cost set, the processing module 820 is specifically configured to: if a second traveling strategy in a feasible strategy pair corresponding to a target cost is that the passive party only preempts the active party, determine that the target traveling strategy is that the target vehicle preempts the target object, where the target cost is the lowest execution cost in the first cost set; if a second traveling strategy in a feasible strategy pair corresponding to a target cost is that the passive party only yields to the active party, determine that the target traveling strategy is that the target vehicle yields to the target object; or if a second traveling strategy in a feasible strategy pair corresponding to a target cost is that the passive party is capable of both preempting the active party and yielding to the active party, determine that the target traveling strategy is that the target vehicle yields to the target object.

In some embodiments, the execution cost associated with the feasible strategy pair includes one or more of the following: a comfort cost, representing a comfort degree during execution of the feasible strategy pair; a pass cost, representing efficiency of the active party and/or the passive party passing through a conflict point between the active party and the passive party; an offset cost, representing an evaluation of an offset that occurs when the active party executes a corresponding traveling strategy and/or an evaluation of an offset that occurs when the passive party executes a corresponding traveling strategy; an inconsistency cost, representing an evaluation of a deviation between a traveling behavior of the target object in the feasible strategy pair and an actual traveling behavior of the target object; or a decision punishment cost, representing an evaluation of whether an intention of the passive party is clear.

In some embodiments, when determining, for any first strategy pair in all the feasible strategy pairs, a comfort cost associated with the first strategy pair, the processing module 820 is specifically configured to: determine, based on an acceleration corresponding to a first traveling strategy in the first strategy pair and a current acceleration of the active party, a first comfort cost generated when the active party executes the first traveling strategy in the first strategy pair; determine, based on an acceleration corresponding to a second traveling strategy in the first strategy pair and a current acceleration of the passive party, a second comfort cost generated when the passive party executes the second traveling strategy in the first strategy pair; and determine, based on the first comfort cost and the second comfort cost, the comfort cost associated with the first strategy pair.

In some embodiments, when determining, for the any first strategy pair in all the feasible strategy pairs, a pass cost associated with the first strategy pair, the processing module 820 is specifically configured to: determine, based on first time and second time, a first pass cost generated when the active party executes the first traveling strategy in the first strategy pair, where the first time is time for the active party to pass through a target point when the first traveling strategy in the first strategy pair is executed, the second time is time for the active party to pass through the target point at a current speed and the current acceleration of the active party, and the target point is a conflict point between a traveling path of the active party and a traveling path of the passive party; determine, based on third time and fourth time, a second pass cost generated when the passive party executes the second traveling strategy in the first strategy pair, where the third time is time for the passive party to pass through the target point when the second traveling strategy in the first strategy pair is executed, and the fourth time is time for the passive party to pass through the target point at a current speed and the current acceleration of the passive party; and determine, based on the first pass cost and the second pass cost, the pass cost associated with the first strategy pair.

In some embodiments, when determining, for the any first strategy pair in all the feasible strategy pairs, an offset cost associated with the first strategy pair, the processing module 820 is specifically configured to: determine, based on an offset generated when the active party executes the first traveling strategy in the first strategy pair and a preset mapping relationship between an offset and an offset cost, a first offset cost generated when the active party executes the first traveling strategy in the first strategy pair; determine, based on an offset generated when the passive party executes the second traveling strategy in the first strategy pair and the preset mapping relationship between the offset and the offset cost, a second offset cost generated when the passive party executes the second traveling strategy in the first strategy pair; and determine, based on the first offset cost and the second offset cost, the offset cost associated with the first strategy pair.

In some embodiments, when determining, for the any first strategy pair in all the feasible strategy pairs, an inconsistency cost associated with the first strategy pair, the processing module 820 is specifically configured to: when a traveling strategy of the target object in the first strategy pair is only preempting the target vehicle or only yielding to the target vehicle, determine a target probability of the target object for preempting the target vehicle, and determine the inconsistency cost based on the target probability; or when a traveling strategy of the target object in the first strategy pair is that both preempting the target vehicle and yielding to the target vehicle are available, determine that the inconsistency cost is a preset cost value.

In some embodiments, when determining, for the any first strategy pair in all the feasible strategy pairs, a decision punishment cost associated with the first strategy pair, the processing module 820 is specifically configured to: determine, according to a preset decision punishment rule and the second traveling strategy in the first strategy pair, the decision punishment cost associated with the first strategy pair.

In some embodiments, the second traveling strategy in the first strategy pair is that the passive party is capable of both preempting the active party and yielding to the active party. When determining, according to the preset decision punishment rule and the second traveling strategy in the first strategy pair, the decision punishment cost associated with the first strategy pair, the processing module 820 is specifically configured to: determine a first decision punishment cost according to the decision punishment rule and the second traveling strategy in the first strategy pair; determine, based on the acceleration corresponding to the first traveling strategy in the first strategy pair and the current acceleration of the active party, a second decision punishment cost generated when the active party executes the first traveling strategy in the first strategy pair; and determine, based on the first decision punishment cost and the second decision punishment cost, the decision punishment cost associated with the first strategy pair.

It should be understood that the foregoing apparatus is configured to perform the method in the foregoing embodiments. An implementation principle and technical effect of a corresponding program module in the apparatus are similar to those described in the foregoing method. For a working process of the apparatus, refer to a corresponding process in the foregoing method. Details are not described herein again.

According to the apparatus in the foregoing embodiments, an embodiment of this application provides a vehicle. The vehicle may include the control apparatus 800 shown in FIG. 8.

According to the method in the foregoing embodiments, an embodiment of this application provides a computer-readable storage medium. The computer-readable storage medium stores a computer program. When the computer program is run on a processor, the processor is enabled to perform the method in the foregoing embodiments.

According to the method in the foregoing embodiments, an embodiment of this application provides a computer program product. When the computer program product runs on a processor, the processor is enabled to perform the method in the foregoing embodiments.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application.

## Claims

1. A control method, comprising:
classifying a target vehicle and a target object into an active party and a passive party, wherein the active party has a passage priority relative to the passive party, and there is a possibility of collision between the target vehicle and the target object;
obtaining a first strategy set that is feasible for the active party, wherein the first strategy set comprises at least one first traveling strategy;
obtaining a second traveling strategy of the passive party corresponding to each first traveling strategy in the first strategy set according to each first traveling strategy in the first strategy set, a traveling parameter of the active party at a current moment, and a traveling parameter of the passive party at the current moment, to obtain a second strategy set, wherein the second traveling strategy is any one of the following: the passive party only preempts the active party, the passive party only yields to the active party, or the passive party is capable of both preempting the active party and yielding to the active party;
determining a target strategy pair set based on the first strategy set and the second strategy set, wherein the target strategy pair set comprises at least one feasible strategy pair, and each feasible strategy pair is formed by one first traveling strategy and one second traveling strategy;
determining execution costs of feasible strategy pairs in the target strategy pair set, to obtain a first cost set, wherein the first cost set comprises an execution cost of each feasible strategy pair;
determining a target traveling strategy based on the first cost set, wherein the target traveling strategy is a traveling strategy that is of the target vehicle and that is associated with a lowest execution cost in the first cost set; and
controlling the target vehicle according to the target traveling strategy.

2. The method according to claim 1, wherein if the target vehicle is the active party, and the target object is the passive party,
the determining a target traveling strategy based on the first cost set specifically comprises:
if a second traveling strategy in a feasible strategy pair corresponding to a target cost is that the passive party only preempts the active party, determining that the target traveling strategy is that the target vehicle yields to the target object, wherein the target cost is the lowest execution cost in the first cost set;
if a second traveling strategy in a feasible strategy pair corresponding to a target cost is that the passive party only yields to the active party, determining that the target traveling strategy is that the target vehicle preempts the target object; or
if a second traveling strategy in a feasible strategy pair corresponding to a target cost is that the passive party is capable of both preempting the active party and yielding to the active party, determining that the target traveling strategy is a first traveling strategy in the feasible strategy pair corresponding to the target cost.

3. The method according to claim 1, wherein if the target vehicle is the passive party, and the target object is the active party,
the determining a target traveling strategy based on the first cost set specifically comprises:
if a second traveling strategy in a feasible strategy pair corresponding to a target cost is that the passive party only preempts the active party, determining that the target traveling strategy is that the target vehicle preempts the target object, wherein the target cost is the lowest execution cost in the first cost set;
if a second traveling strategy in a feasible strategy pair corresponding to a target cost is that the passive party only yields to the active party, determining that the target traveling strategy is that the target vehicle yields to the target object; or
if a second traveling strategy in a feasible strategy pair corresponding to a target cost is that the passive party is capable of both preempting the active party and yielding to the active party, determining that the target traveling strategy is that the target vehicle yields to the target object.

4. The method according to any one of claims 1 to 3, wherein the execution cost associated with the feasible strategy pair comprises one or more of the following:
a comfort cost, representing a comfort degree during execution of the feasible strategy pair;
a pass cost, representing efficiency of the active party and/or the passive party passing through a conflict point between the active party and the passive party;
an offset cost, representing an evaluation of an offset that occurs when the active party executes a corresponding traveling strategy and/or an evaluation of an offset that occurs when the passive party executes a corresponding traveling strategy;
an inconsistency cost, representing an evaluation of a deviation between a traveling behavior of the target object in the feasible strategy pair and an actual traveling behavior of the target object; or
a decision punishment cost, representing an evaluation of whether an intention of the passive party is clear.

5. The method according to claim 4, wherein determining, for any first strategy pair in all the feasible strategy pairs, a comfort cost associated with the first strategy pair specifically comprises:
determining, based on an acceleration corresponding to a first traveling strategy in the first strategy pair and a current acceleration of the active party, a first comfort cost generated when the active party executes the first traveling strategy in the first strategy pair;
determining, based on an acceleration corresponding to a second traveling strategy in the first strategy pair and a current acceleration of the passive party, a second comfort cost generated when the passive party executes the second traveling strategy in the first strategy pair; and
determining, based on the first comfort cost and the second comfort cost, the comfort cost associated with the first strategy pair.

6. The method according to claim 4 or 5, wherein determining, for the any first strategy pair in all the feasible strategy pairs, a pass cost associated with the first strategy pair specifically comprises:
determining, based on first time and second time, a first pass cost generated when the active party executes the first traveling strategy in the first strategy pair, wherein the first time is time for the active party to pass through a target point when the first traveling strategy in the first strategy pair is executed, the second time is time for the active party to pass through the target point at a current speed and the current acceleration of the active party, and the target point is a conflict point between a traveling path of the active party and a traveling path of the passive party;
determining, based on third time and fourth time, a second pass cost generated when the passive party executes the second traveling strategy in the first strategy pair, wherein the third time is time for the passive party to pass through the target point when the second traveling strategy in the first strategy pair is executed, and the fourth time is time for the passive party to pass through the target point at a current speed and the current acceleration of the passive party; and
determining, based on the first pass cost and the second pass cost, the pass cost associated with the first strategy pair.

7. The method according to any one of claims 4 to 6, wherein determining, for the any first strategy pair in all the feasible strategy pairs, an offset cost associated with the first strategy pair specifically comprises:
determining, based on an offset generated when the active party executes the first traveling strategy in the first strategy pair and a preset mapping relationship between an offset and an offset cost, a first offset cost generated when the active party executes the first traveling strategy in the first strategy pair;
determining, based on an offset generated when the passive party executes the second traveling strategy in the first strategy pair and the preset mapping relationship between the offset and the offset cost, a second offset cost generated when the passive party executes the second traveling strategy in the first strategy pair; and
determining, based on the first offset cost and the second offset cost, the offset cost associated with the first strategy pair.

8. The method according to any one of claims 4 to 7, wherein determining, for the any first strategy pair in all the feasible strategy pairs, an inconsistency cost associated with the first strategy pair specifically comprises:
when a traveling strategy of the target object in the first strategy pair is only preempting the target vehicle or only yielding to the target vehicle, determining a target probability of the target object for preempting the target vehicle, and determining the inconsistency cost based on the target probability; or
when a traveling strategy of the target object in the first strategy pair is that both preempting the target vehicle and yielding to the target vehicle are available, determining that the inconsistency cost is a preset cost value.

9. The method according to any one of claims 4 to 8, wherein determining, for the any first strategy pair in all the feasible strategy pairs, a decision punishment cost associated with the first strategy pair specifically comprises:
determining, according to a preset decision punishment rule and the second traveling strategy in the first strategy pair, the decision punishment cost associated with the first strategy pair.

10. The method according to claim 9, wherein the second traveling strategy in the first strategy pair is that the passive party is capable of both preempting the active party and yielding to the active party; and
the determining, according to a preset decision punishment rule and the second traveling strategy in the first strategy pair, the decision punishment cost associated with the first strategy pair specifically comprises:
determining a first decision punishment cost according to the decision punishment rule and the second traveling strategy in the first strategy pair;
determining, based on the acceleration corresponding to the first traveling strategy in the first strategy pair and the current acceleration of the active party, a second decision punishment cost generated when the active party executes the first traveling strategy in the first strategy pair; and
determining, based on the first decision punishment cost and the second decision punishment cost, the decision punishment cost associated with the first strategy pair.

11. A control apparatus, wherein the apparatus comprises:
a classification module, configured to classify a target vehicle and a target object into an active party and a passive party, wherein the active party has a passage priority relative to the passive party, and there is a possibility of collision between the target vehicle and the target object; and
a processing module, configured to obtain a first strategy set that is feasible for the active party, wherein the first strategy set comprises at least one first traveling strategy, wherein
the processing module is further configured to obtain a second traveling strategy of the passive party corresponding to each first traveling strategy in the first strategy set according to each first traveling strategy in the first strategy set, a traveling parameter of the active party at a current moment, and a traveling parameter of the passive party at the current moment, to obtain a second strategy set, wherein the second traveling strategy is any one of the following: the passive party only preempts the active party, the passive party only yields to the active party, or the passive party is capable of both preempting the active party and yielding to the active party;
the processing module is further configured to determine a target strategy pair set based on the first strategy set and the second strategy set, wherein the target strategy pair set comprises at least one feasible strategy pair, and each feasible strategy pair is formed by one first traveling strategy and one second traveling strategy;
the processing module is further configured to determine execution costs of feasible strategy pairs in the target strategy pair set, to obtain a first cost set, wherein the first cost set comprises an execution cost of each feasible strategy pair;
the processing module is further configured to determine a target traveling strategy based on the first cost set, wherein the target traveling strategy is a traveling strategy that is of the target vehicle and that is associated with a lowest execution cost in the first cost set; and
the processing module is further configured to control the target vehicle according to the target traveling strategy.

12. The apparatus according to claim 11, wherein if the target vehicle is the active party, and the target object is the passive party,
when determining the target traveling strategy based on the first cost set, the processing module is specifically configured to:
if a second traveling strategy in a feasible strategy pair corresponding to a target cost is that the passive party only preempts the active party, determine that the target traveling strategy is that the target vehicle yields to the target object, wherein the target cost is the lowest execution cost in the first cost set;
if a second traveling strategy in a feasible strategy pair corresponding to a target cost is that the passive party only yields to the active party, determine that the target traveling strategy is that the target vehicle preempts the target object; or
if a second traveling strategy in a feasible strategy pair corresponding to a target cost is that the passive party is capable of both preempting the active party and yielding to the active party, determine that the target traveling strategy is a first traveling strategy in the feasible strategy pair corresponding to the target cost.

13. The apparatus according to claim 11, wherein if the target vehicle is the passive party, and the target object is the active party,
when determining the target traveling strategy based on the first cost set, the processing module is specifically configured to:
if a second traveling strategy in a feasible strategy pair corresponding to a target cost is that the passive party only preempts the active party, determine that the target traveling strategy is that the target vehicle preempts the target object, wherein the target cost is the lowest execution cost in the first cost set;
if a second traveling strategy in a feasible strategy pair corresponding to a target cost is that the passive party only yields to the active party, determine that the target traveling strategy is that the target vehicle yields to the target object; or
if a second traveling strategy in a feasible strategy pair corresponding to a target cost is that the passive party is capable of both preempting the active party and yielding to the active party, determine that the target traveling strategy is that the target vehicle yields to the target object.

14. The apparatus according to any one of claims 11 to 13, wherein the execution cost associated with the feasible strategy pair comprises one or more of the following:
a comfort cost, representing a comfort degree during execution of the feasible strategy pair;
a pass cost, representing efficiency of the active party and/or the passive party passing through a conflict point between the active party and the passive party;
an offset cost, representing an evaluation of an offset that occurs when the active party executes a corresponding traveling strategy and/or an evaluation of an offset that occurs when the passive party executes a corresponding traveling strategy;
an inconsistency cost, representing an evaluation of a deviation between a traveling behavior of the target object in the feasible strategy pair and an actual traveling behavior of the target object; or
a decision punishment cost, representing an evaluation of whether an intention of the passive party is clear.

15. The apparatus according to claim 14, wherein when determining, for any first strategy pair in all the feasible strategy pairs, a comfort cost associated with the first strategy pair, the processing module is specifically configured to:
determine, based on an acceleration corresponding to a first traveling strategy in the first strategy pair and a current acceleration of the active party, a first comfort cost generated when the active party executes the first traveling strategy in the first strategy pair;
determine, based on an acceleration corresponding to a second traveling strategy in the first strategy pair and a current acceleration of the passive party, a second comfort cost generated when the passive party executes the second traveling strategy in the first strategy pair; and
determine, based on the first comfort cost and the second comfort cost, the comfort cost associated with the first strategy pair.

16. The apparatus according to claim 14 or 15, wherein when determining, for the any first strategy pair in all the feasible strategy pairs, a pass cost associated with the first strategy pair, the processing module is specifically configured to:
determine, based on first time and second time, a first pass cost generated when the active party executes the first traveling strategy in the first strategy pair, wherein the first time is time for the active party to pass through a target point when the first traveling strategy in the first strategy pair is executed, the second time is time for the active party to pass through the target point at a current speed and the current acceleration of the active party, and the target point is a conflict point between a traveling path of the active party and a traveling path of the passive party;
determine, based on third time and fourth time, a second pass cost generated when the passive party executes the second traveling strategy in the first strategy pair, wherein the third time is time for the passive party to pass through the target point when the second traveling strategy in the first strategy pair is executed, and the fourth time is time for the passive party to pass through the target point at a current speed and the current acceleration of the passive party; and
determine, based on the first pass cost and the second pass cost, the pass cost associated with the first strategy pair.

17. The apparatus according to any one of claims 14 to 16, wherein when determining, for the any first strategy pair in all the feasible strategy pairs, an offset cost associated with the first strategy pair, the processing module is specifically configured to:
determine, based on an offset generated when the active party executes the first traveling strategy in the first strategy pair and a preset mapping relationship between an offset and an offset cost, a first offset cost generated when the active party executes the first traveling strategy in the first strategy pair;
determine, based on an offset generated when the passive party executes the second traveling strategy in the first strategy pair and the preset mapping relationship between the offset and the offset cost, a second offset cost generated when the passive party executes the second traveling strategy in the first strategy pair; and
determine, based on the first offset cost and the second offset cost, the offset cost associated with the first strategy pair.

18. The apparatus according to any one of claims 14 to 17, wherein when determining, for the any first strategy pair in all the feasible strategy pairs, an inconsistency cost associated with the first strategy pair, the processing module is specifically configured to:
when a traveling strategy of the target object in the first strategy pair is only preempting the target vehicle or only yielding to the target vehicle, determine a target probability of the target object for preempting the target vehicle, and determine the inconsistency cost based on the target probability; or
when a traveling strategy of the target object in the first strategy pair is that both preempting the target vehicle and yielding to the target vehicle are available, determine that the inconsistency cost is a preset cost value.

19. The apparatus according to any one of claims 14 to 18, wherein when determining, for the any first strategy pair in all the feasible strategy pairs, a decision punishment cost associated with the first strategy pair, the processing module is specifically configured to:
determine, according to a preset decision punishment rule and the second traveling strategy in the first strategy pair, the decision punishment cost associated with the first strategy pair.

20. The apparatus according to claim 19, wherein the second traveling strategy in the first strategy pair is that the passive party is capable of both preempting the active party and yielding to the active party; and
when determining, according to the preset decision punishment rule and the second traveling strategy in the first strategy pair, the decision punishment cost associated with the first strategy pair, the processing module is specifically configured to:
determine a first decision punishment cost according to the decision punishment rule and the second traveling strategy in the first strategy pair;
determine, based on the acceleration corresponding to the first traveling strategy in the first strategy pair and the current acceleration of the active party, a second decision punishment cost generated when the active party executes the first traveling strategy in the first strategy pair; and
determine, based on the first decision punishment cost and the second decision punishment cost, the decision punishment cost associated with the first strategy pair.

21. A vehicle, comprising the control apparatus according to any one of claims 11 to 20.

22. A computer-readable storage medium, wherein the computer-readable storage medium stores a computer program, and when the computer program is run on a processor, the processor is enabled to perform the method according to any one of claims 1 to 10.

23. A computer program product, wherein when the computer program product runs on a processor, the processor is enabled to perform the method according to any one of claims 1 to 10.
